(19) Europäisches Patentamt
European Patent Office
Office européen des brevets

(11) **EP 4 236 193 B1**

(12) **EUROPEAN PATENT SPECIFICATION**

(45) Date of publication and mention
of the grant of the patent:
**07.08.2024 Bulletin 2024/32**

(21) Application number: **22159312.2**

(22) Date of filing: **28.02.2022**

(51) International Patent Classification (IPC):
**H04L 9/08** (2006.01)

(52) Cooperative Patent Classification (CPC):
**H04L 9/0894;** H04L 2209/04; H04L 2209/46

(54) **INNER PRODUCTS WITH SECURE MULTI-PARTY COMPUTATIONS**

INNENPRODUKTE MIT SICHEREN MEHRPARTEIENBERECHNUNGEN

PRODUITS SCALAIRES AVEC CALCULS MULTIPARTITES SÉCURISÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.08.2023 Bulletin 2023/35**

(73) Proprietor: **Sedicii Innovations Ltd.**
**X91 P20H Waterford (IE)**

(72) Inventor: **De Vega Rodrigo, Miguel**
**38009 Santa Cruz de Tenerife (ES)**

(74) Representative: **FRKelly**
**Waterways House**
**Grand Canal Quay**
**Dublin D02 PD39 (IE)**

(56) References cited:
- ALBERTO SONNINO: "FMPC: Secure Multiparty Computation from Fourier Series and Parseval's Identity", ARXIV.ORG, CORNELL UNIVERSITY LIBRARY, 201 OLIN LIBRARY CORNELL UNIVERSITY ITHACA, NY 14853, 5 December 2019 (2019-12-05), XP081545915
- ALESSANDRO BACCARINI ET AL: "Multi-Party Replicated Secret Sharing over a Ring with Applications to Privacy-Preserving Machine Learning", vol. 20201221:074048, 17 December 2020 (2020-12-17), pages 1 - 25, XP061041845, Retrieved from the Internet <URL:http://eprint.iacr.org/2020/1577.pdf> [retrieved on 20201217]

EP 4 236 193 B1

**Description**

Technical Field

This invention relates to improvements in computing inner products between multidimensional vectors using Secure Multi Party Computation (SMPC).

Background Art

Secure Multi Party Computation (SMPC) enables a set of parties to collaboratively compute a function over their inputs while keeping them private. There are several SMPC flavours described in the literature, including Yao's Garbled Circuits (Yao, Andrew Chi-Chih (1986). "How to generate and exchange secrets". 27th Annual Symposium on Foundations of Computer Science (SFCS 1986). Foundations of Computer Science, 1986., 27th Annual Symposium on. pp. 162-167. doi:10.1109/SFCS.1986.25. ISBN 978-0-8186-0740-0.), GMW (O. Goldreich, S. Micali, A. Wigderson, "How to play ANY mental game", Proceedings of the nineteenth annual ACM symposium on Theory of Computing, January 1987, Pages 218-229, doi:10.1145/28395.28420; and T. Schneider and M. Zohner, "GMW vs. Yao? Efficient secure two-party computation with low depth circuits," in Financial Cryptography and Data Security (FC'13), ser. LNCS, vol. 7859. Springer, 2013, pp. 275-292.), BGW (Ben-Or, M., Goldwasser, S., Wigderson, A.: Completeness theorems for Non-Cryptographic Fault-Tolerant Distributed Computation. In: Proc. ACM STOC '88, pp. 1-10 (1988)), SPDZ (Damgård I., Pastro V., Smart N., Zakarias S. (2012) Multiparty Computation from Somewhat Homomorphic Encryption. In: Safavi-Naini R., Canetti R. (eds) Advances in Cryptology-CRYPTO 2012. CRYPTO 2012. Lecture Notes in Computer Science, vol 7417. Springer, Berlin, Heidelberg. https://doi.org/10.1007/978-3-642-32009-5_38), BMR (Beaver, D., S. Micali, and P. Rogaway. 1990. "The Round Complexity of Secure Protocols (Extended Abstract)". In: 22nd Annual ACM Symposium on Theory of Computing. ACM Press. 503-513), and GESS (Kolesnikov, V. 2005. "Gate Evaluation Secret Sharing and Secure One-Round Two-Party Computation". In: Advances in Cryptology - ASIACRYPT 2005. Ed. by B. K. Roy. Vol. 3788. Lecture Notes in Computer Science. Springer, Heidelberg. 136-155).

There are two main constructions of SMPC: Circuit Garbling (CG) and Linear Secret Sharing (LSS). Circuit garbling requires encrypting keys in a specific order to simulate the function evaluation. Linear Secret Sharing computes shares from the inputs and distributes them among the nodes. In this disclosure we focus on SMPC flavours using LSS.

The following is a list of the main roles for the nodes participating in a SMPC computation:

Dealer node: These nodes contribute inputs to the computation

Computing node: These nodes perform the actual SMPC computation on the inputs provided by dealer nodes

Result node: These nodes reconstruct the result from a finished SMPC computation

A node can have more than one role. For example, a node can be dealer, computing and result node at the same time.

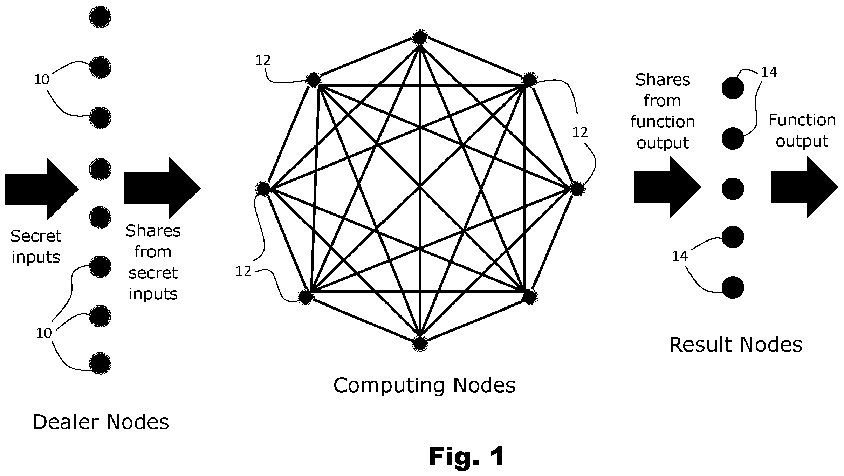

Fig. 1 is a network diagram showing a plurality of nodes that co-operate to perform a secure multiparty computation (SMPC). The nodes are categorised as dealer nodes 10, computing nodes 12, and result nodes 14.

Not all of the nodes are labelled with a reference numeral but it should be understood that all nodes in the same group are of the same type i.e. all nodes in the left vertical line are dealer nodes 10, all nodes in the central octagonal group are computing nodes, and all nodes in the right vertical line are result nodes.

It should also be understood by the skilled person that both in the conventional arrangement of Fig. 1 and in the present invention, the arrangement and number of nodes is not intended to represent any specific reality, and nodes are likely to be arranged into logical rather than physical groups, with nodes able to communicate with any other node via a network address on a public or private network which could be a local area network, or a wide area network. Nodes could be even part of the same computing system e.g. different processors or cores in a multiprocessor system. Communication protocols are at the choice of the system designer and are likely to be dictated by the application and security requirements of the system in which they are implemented.

Each node may be implemented in a processor of a computing system which is programmed to perform the relevant methods and algorithms disclosed herein, and further has access to a memory, and a network connection. In many implementations, each node will be a suitably programmed computer system.

The dealer nodes 10 contribute inputs to the computation. Specifically, they are provided with secret inputs, and create shares from these secret inputs and distribute them among the computing nodes 12. The computing nodes perform the actual SMPC computation and each computing node 12 provides a share of a computation output to each result node 14. The result nodes 14 reconstruct the result from the received result shares.

LSS SMPC protocols comprise the following three phases:

Phase 1- Share distribution: Each dealer node breaks down each private input to the computation into a number N of *shares* and sends each share to a different computing node. Each share reveals no information about the private input. It is only when all N shares from a private input are gathered that it can be reconstructed.

Phase 2 - Computation: Each computing node has one share from each private input to a computation. The computation consists of evaluating the output of a function over the private inputs. In order to do this, the computing nodes perform operations on their shares that depend on the specific function to be evaluated by the SMPC protocol.

Phase 3 - Result reconstruction: After Phase 2, each computing node has obtained a share from the result of the computation (i.e. the function to be evaluated). They send their share to one or several result nodes. After gathering all N shares from the result, a result node can reconstruct the output of the function that was jointly evaluated.

For example, assume that two dealer nodes have each one string. They would like the network of computing nodes to evaluate the result from comparing the two strings and to communicate this result to a result node. The strings are private to the dealer nodes, so they should not be sent over to the computing nodes in plaintext or in encrypted form. Each dealer node breaks down their private string into N shares and send each share to a different computing node. After receiving one share per each one of the two strings to be compared, the computing nodes follow the SMPC protocol to obtain a share of the result from the computation. This result could be a Boolean representing a string match with a TRUE value and a string mismatch with a FALSE value. Each node sends their share of the result to a result node, which reconstructs the TRUE or FALSE result from the string comparison.

The main problem with SMPC is the communication complexity. A large number of message exchanges and/or communication bandwidth is required in order for the computing nodes to collaboratively obtain in Phase 2 a share of the result of the function being evaluated when this function is nontrivial. By nontrivial we mean a function with a large number of inputs and a large number of operations on those inputs. Real-world applications of SMPC typically require nontrivial functions, which severely affects the applicability of SMPC in production scenarios.

For example, in GMW SMPC computing nodes are able to evaluate Boolean functions on binary inputs. A Boolean function is a function comprising AND, OR, XOR, NAND, NOR and NXOR logical gates. Using simple algebraic equivalences, it is possible to transform any Boolean function into its Arithmetic Normal Form (ANF). This form comprises groups of AND gates linked by XOR gates. Computing nodes running GMW can process XOR gates without the need to exchange any message, hence with great efficiency. However, the evaluation of each AND gate requires the exchange of messages. Nontrivial functions will have XOR as well as AND gates, making the overall GMW function evaluation slow

In another example, let us evaluate BGW SMPC. In this SMPC flavour computing nodes evaluate arithmetic functions on integer inputs comprising additions and multiplications. Computing nodes running BGW can process additions without the need to exchange any message. However, the evaluation of multiplications requires the exchange of messages. Once more, nontrivial functions will have additions and multiplications, making the overall BGW function evaluation slow.

As a notable exception to the SMPC scalability problem mentioned above we have FMPC (Sonnino, Alberto. "FMPC: Secure Multiparty Computation from Fourier Series and Parseval's Identity." arXiv preprint arXiv:1912.02583 (2019)), an SMPC protocol for arithmetic circuits based on Fourier series capable of evaluating the multiplication of secrets with no online communication. FMPC makes use of Parseval's Theorem to allow for the multiplication of secrets without requiring the nodes to exchange any message. However, there are significant drawbacks with this approach:

- FMPC is limited to two computing nodes only. Real-world SMPC applications may require multiple computing nodes.
- In FMPC each share comprises parametric equations (sometimes more than one) that describe the infinite sequence of Fourier coefficients, and not discrete values.
- FMPC presents a compromise between security and computational efficiency. On the one hand, it requires the computation of scalar products of vectors with infinite components, which introduces problems around computational efficiency and correctness. These problems are addressed with a convenient choice of the mask functions, that allow evaluating the scalar products of vectors with infinite components analytically. However, on the other hand, limiting the choice of the mask functions to those amenable to analytic calculations makes it easier for an attacker to guess them. This negatively impacts the security of the protocol, since it requires that the mask functions remain private to a trusted authority.
- FMPC focuses on the multiplication of secrets, and assumes that additions can be performed using traditional algebra as described by SPDZ.
- FMPC assumes the presence of a trusted authority to do a trusted setup. This significantly limits the range of applications to which it is suited.

The present invention aims to overcome these limitations, and specifically to do so in the context of the evaluation with SMPC of a particular type of function involving the computation of an inner product between two multidimensional vectors. The evaluation of the inner product function using SMPC is the focus of this invention because it supports the evaluation of any generic function with private inputs from one or two dealers.

In the arithmetic setting this can be seen by noticing that:

1) A generic function over a set of secret inputs $S = \{s_0, s_1, ..., s_{S-1}\}$ can be expressed as sums of products over the inputs:

$$f = f(s_0, s_1, ..., s_{S-1}) = \sum_{a=0}^{N-1} \prod_{m=0}^{M_a-1} s_{i_{a,m}} \bmod p$$

2) If the inputs are all coming from two dealers, then each dealer can locally multiply their secrets in the a-th sum to obtain $x_a$ and $y_a$, respectively, such that the set S can be expressed as $S = \{x_0, x_1, ..., x_{N-1}, y_0, y_1, ..., y_{N-1}\}$ and the equation above simplifies to an inner product:

$$f = f(x_0, x_1, ..., x_{N-1}, y_0, y_1, ..., y_{N-1}) = \left(\sum_{a=0}^{N-1} x_a \cdot y_a\right) \bmod p$$

More formally, let $x = (x_0, x_1, ..., x_{N-1})$ and $y = (y_0, y_1, ..., y_{N-1})$ be two vectors with N dimensions, each known to a different dealer. The inner product, scalar product or dot product of these two vectors, represented as <x,y> is defined as:

$$< \mathrm{x}, \mathrm{y} > \quad = \sum_{i=0}^{N-1} x_i \cdot y_i \qquad \text{Eq. 1}$$

In particular, the evaluation of the inner product allows for the computation of a series of core functions which in turn underpin important use cases. In the arithmetic setting, some examples of such core functions are:

- The Euclidean distance between the two vectors in Euclidean space, which is the length of the line segment between the two vectors. The Euclidean distance can be computed using an inner product.
- The covariance between two random variables X and Y is a measure of their joint variability. A positive covariance indicates that they tend to move in the same direction, whereas a negative covariance reveals that the two variables tend to move in inverse directions. The covariance can be estimated from observations of both random variables using the sample covariance, which can be expressed as an inner product.
- The correlation between two random variables X and Y refers to the degree to which a pair of variables are linearly related. It can be expressed in terms of three covariance calculations between X and Y, X and X, and Y and Y, which in turn can be computed as inner products.
- The Euclidean norm of a vector determines its size. In a Euclidean vector space, it can be computed as an inner product.
- The cosine similarity between two vectors is equal to the cosine of the angle between them, which in turn measures how similar these vectors are. The cosine similarity can be expressed in terms of 3 inner products, two of which represent the norms of each one of the vectors.

The computation of these functions finds numerous applications in disciplines such as physics, chemistry, mathematics, biology, and psychology, in industries such as finance, health, aeronautic, telecommunications, and insurance, and to tackle problems such as global warming, money laundering, and epidemics.

Disclosure of the Invention

In a first aspect there is provided a computer-implemented method of performing a multi-party computation by a network of data processors, said data processors comprising first and second dealer nodes, a plurality of M computing nodes, and at least one result node,

By making use of a transform for which Parseval's theorem holds, the method allows the dealer nodes to compute blinded vectors as Hadamard products which can be shared without revealing the private input vectors (i.e. the secrets). The computing nodes can then use shares of the blinded vectors to individually calculate result shares, without access to the secrets, and those result shares can be combined to compute the inner product of those secrets.

Preferably, the first and second dealer nodes generate the first and second private input vectors x and $y$ of dimension M, respectively, as expansions of original unexpanded private input vectors $x_{orig}$ and $y_{orig}$ of dimension N, respectively, where N < M, and where:

$$x_{orig} = (x_0, x_1, \ldots, x_{N-1})$$

$$y_{orig} = (y_0, y_1, \ldots, y_{N-1})$$

$$x = (x_0, x_1, \ldots, x_{N-1}, x_N, \ldots, x_{M-1})$$

$$y = (y_0, y_1, \ldots, y_{N-1}, y_N, \ldots, y_{M-1})$$

and where the components $x_N, \ldots, x_{M-1}$ and $y_N, \ldots, y_{M-1}$ are chosen such that:

$$\sum_{i=N}^{M-1} x_i \cdot y_i = 0$$

In one embodiment, the steps of providing the first and second dealers with the random vectors $A$ and $A^{-1}$ comprise both dealers operating a pseudo-random number generator in sync to generate the components of vector $A$, and the second dealer node calculating $A^{-1}$ from the vector $A$.

In another embodiment, the steps of providing the first and second dealers with the random vectors $A$ and $A^{-1}$ comprise a trusted third party node communicating vector $A$ to the first dealer node and either vector $A$ or vector $A^{-1}$ to the second dealer node.

In yet a further embodiment, the steps of providing the first and second dealers with the random vectors $A$ and $A^{-1}$ comprise communicating either vector $A$ or vector $A^{-1}$ cryptographically to at least one of the first and second dealer nodes.

In an embodiment, the vector A is {1, 1, ..., 1}.

In a further aspect, there is provided a computer-implemented method of performing a multiparty computation by a network of data processors, said data processors comprising first and second dealer nodes, a plurality of M computing nodes, and at least one result node, the method comprising:

(a) for each $i \in \{0, \ldots, N - 1\}$ where N is the number of components of a first private input vector $x = (x_0, x_1, \ldots, x_{N-1})$ known to the first dealer node and of a second private input vector $y = (y_0, y_1, \ldots, y_{M-1})$ known to the second dealer node, providing the first dealer node with a transformed vector $U_i = (U_{i,0}, \ldots, U_{i,M-1})$ with components $U_{i,j}, j \in \{0, \ldots, (M - 1)\}$ which is a transform of a random vector $u_i = (u_{i,0}, u_{i,1}, \ldots, u_{i,M-1})$ according to a discrete linear transform for which Parseval's theorem holds;

(b) for each $i \in \{0, \ldots, N - 1\}$, providing the second dealer node with a transformed vector $V_i = (V_{i,0}, \ldots, V_{i,M-1})$ with components $V_{i,j}, j \in \{0, \ldots, (M - 1)\}$ which is a transform of a random vector $v_i = (v_{i,0}, v_{i,1}, \ldots, v_{i,M-1})$ according to said discrete linear transform, wherein $u_i$ and $v_i$ satisfy the condition:

$$\sum_{i=0}^{N-1} \sum_{j=1}^{M-1} u_{i,j} \cdot v_{i,j} = 0$$

(c) for each $j \in \{0, \ldots, (M - 1)\}$, providing the j-th computing node with each of the components $U_{i,j}$ and $V_{i,j}$ for $i \in \{0, \ldots, N - 1\}$;

(d) for each $i \in \{0, \ldots, N - 1\}$, the first dealer node computing a scalar $a_i = x_i - u_{i,0}$, and the second dealer node

computing a scalar $b_i = y_i - v_{i,0}$;

(e) the first dealer sending to all computing nodes all of the scalars $\{a_0, ..., a_{N-1}\}$;

(f) the second dealer sending to all computing nodes all of the scalars $\{b_0, ..., b_{N-1}\}$;

(g) for each $j \in \{0,...,(M - 1)\}$, the j-th computing node computing for each $i \in \{0, ..., N - 1\}$ the transforms $\boldsymbol{A_i} = (A_{i,0}, ...,A_{i,M-1})$ and $\boldsymbol{B_i} = (B_{i,0},...,B_{i,M-1})$, wherein $\boldsymbol{A_i}$ is the transform according to said discrete linear transform of a vector $(a_i, 0, ... ,0)$ and wherein $\boldsymbol{B_i}$ is the transform according to said discrete linear transform of a vector $(b_i, 0, ...,0)$;

(h) for each $j \in \{0,...,(M - 1)\}$, the j-th computing node computing for each $i \in \{0, ..., N - 1\}$: $C_{i,j} = U_{i,j} + A_{i,j}$ and $D_{i,j} = V_{i,j} + B_{i,j}$;

(i) or each $j \in \{0, ..., (M - 1)\}$, the j-th computing node computing a result share:

$$R_j = \frac{1}{M} \sum_{i=0}^{N-1} C_{i,j} \cdot D_{i,j}$$

(j) for each $j \in \{0, ..., (M - 1)\}$, the j-th computing node sending the result share to one or more of the one or more result nodes;

(k) said one or more result nodes calculating, from the M received result shares $R_j$ for $j \in \{0, ..., M - 1\}$, the inner product of the first and second private input vectors $\boldsymbol{x}, \boldsymbol{y}$ as:

$$< \boldsymbol{x}, \boldsymbol{y} > = \sum_{j=0}^{M-1} R_j$$

In this aspect we again make use of a transform for which Parseval's theorem holds, the method allowing the dealer nodes to compute blinded scalars which can be shared without revealing the private input vectors (i.e. the secrets). The computing nodes can then use shares of the blinded sums to individually calculate result shares, without access to the secrets, and those result shares can be combined to compute the inner product of those secrets.

In one embodiment, each dealer node independently generates random values $u_{i,0}, v_{i,0}$, $i \in \{0, ...,N - 1\}$, respectively, and completes the N vectors

$$\boldsymbol{u_i} = \left(u_{i,0}, u_{i,1}, ..., u_{i,M-1}\right)$$

$$\boldsymbol{v_i} = \left(v_{i,0}, v_{i,1}, ..., v_{i,M-1}\right)$$

such that the condition $\sum_{i=0}^{N-1} \sum_{j=1}^{M-1} u_{i,j} \cdot v_{i,j} = 0$ holds.

In an embodiment, the first dealer node and second dealer node are programmed with rules to ensure that for any corresponding pair of vector components $u_{i,j}$ and $v_{i,j}$ and $j > 0$, one of the pair is zero.

In an embodiment, the first dealer node and second dealer node are programmed with rules to ensure that for each $i \in \{0, ...,N - 1\}$, a first subset of indices $j \in \{1, ..., (M - 1)\}$ are allocated for the first dealer node to set the vector components $u_{i,j}$ equal to one, and a second subset of indices $j \in \{1, ..., (M - 1)\}$ are allocated for the second dealer node to set the vector components $v_{i,j}$ equal to one, with each dealer node setting the remaining components of its respective vector $u_i$ or $v_i$ to sum to zero.

In an embodiment, the first and second dealer nodes runs a pseudo-random generator in sync with one another, and wherein the values of the components $u_{i,j}$ and $v_{i,j}$ are identical and wherein at least one vector component is computed by at least one dealer node to ensure that

$$\sum_{i=0}^{N-1} \sum_{j=1}^{M-1} u_{i,j} \cdot v_{i,j} = 0$$

In a further embodiment, the vectors $\boldsymbol{u_i}$ and $\boldsymbol{v_i}$ are collaboratively generated such that each pair of opposed components $\{u_{i,j}, v_{i,j}\}$ for j $\in$ {1, ..., $M$ - 1} has one of the pair of components set to zero.

Preferably in this embodiment, the vectors $\boldsymbol{u_i}$ and $\boldsymbol{v_i}$ are of the form:

$$\boldsymbol{u_i} = \left(u_{i,0}, 0, \dots, 0, u_{i,(M-1)/2+1}, \dots, u_{i,M-1}\right),$$

$$\boldsymbol{v_i} = \left(v_{i,0}, v_{i,1}, \dots, v_{i,(M-1)/2}, 0, \dots, 0\right),$$

where $u_{i,0}, u_{i,(M-1)/2+1}, \dots, u_{i,M-1}$ and $v_{i,0}, v_{i,1}, \dots, v_{i,(M-1)/2}$ are random or pseudo-random.

Further, preferably, the M computing nodes collaboratively compute the vectors $\boldsymbol{u_i}$ and $\boldsymbol{v_i}$.

Further, preferably, the M computing nodes further collaboratively compute the transforms $\boldsymbol{U_i}$ and $\boldsymbol{V_i}$.

Preferably, for each $j \in$ {0, ..., $(M - 1)$}, the j-th computing node for each $i \in$ {0, ..., $N - 1$}:

(i) generating a random share $[u_{i,q}]_j$ of component $u_{i,q}$, for $q \in$ {0, $(M - 1)/2 + 1$, ... , $M$ -1};

(ii) evaluating a public polynomial $p(\alpha)$, which satisfies $p(0) = 0$, at $\alpha = \alpha_j$ to obtain a share $[0]_j$ of every zero component of vector $\boldsymbol{u_i}$;

(iii) generating a random share $[v_{i,q}]_j$ of component $v_{i,q}$, for $q \in$ {0,1, ..., $(M - 1)/2$;

(iv) evaluating said public polynomial p($\alpha$) at $\alpha = \alpha_j$ to obtain a share $[0]_j$ of every zero component of vector $\boldsymbol{v_i}$;

(v) locally computing a share of each component of the transformed vectors $\boldsymbol{U_i} = (U_{i,0}, U_{i,1}, \dots, U_{i,M-1}), \boldsymbol{V_i} = (V_{i,0}, V_{i,1}, \dots, V_{i,M-1})$ as follows:

$$\left[U_{i,k}\right]_j = \sum_{q=0}^{M-1} \lambda_{k,q} \left[u_{i,q}\right]_j$$
$$\left[V_{i,k}\right]_j = \sum_{q=0}^{M-1} \lambda_{k,q} \left[v_{i,q}\right]_j \qquad i \in \{0, \dots, N-1\}, k \in \{0, \dots, M-1\}$$

where $\lambda_{k,q}$ is an element of the transform matrix indexed as

$$\begin{pmatrix} \lambda_{0,0} & \cdots & \lambda_{0,M-1} \\ \vdots & \ddots & \vdots \\ \lambda_{M-1,0} & \cdots & \lambda_{M-1,M-1} \end{pmatrix}$$

which acts on a vector $\boldsymbol{c_i} = (x_i, u_{i,1}, \dots, u_{i,M-1})$ to generate its transformed vector $\boldsymbol{C_i} = (C_{i,0}, \dots, C_{i,M-1})$, $i \in$ {0, ..., $N$ - 1}:

$$\begin{pmatrix} C_{i,0} \\ C_{i,1} \\ \vdots \\ C_{i,M-1} \end{pmatrix} = \begin{pmatrix} 1 & 1 & \cdots & 1 \\ 1 & \alpha & \cdots & \alpha^{(M-1)} \\ \vdots & \vdots & \ddots & \vdots \\ 1 & \alpha^{(M-1)} & \cdots & \alpha^{(M-1)^2} \end{pmatrix} \begin{pmatrix} x_i \\ u_{i,1} \\ \vdots \\ u_{i,M-1} \end{pmatrix}$$

(vi) sending its shares $[U_{i,k}]_j, [V_{i,k}]_j$ of the k-th component from the transformed vectors $\boldsymbol{U_i}, \boldsymbol{V_i}$ to the k-th computing node, for $k \in$ {0, ... , $M$ - 1}; and

(vii) sending its shares $[U_{i,k}]_0, \dots, [U_{i,k}]_{M-1}$ to the first dealer, and its shares $[V_{i,k}]_0, \dots, [V_{i,k}]_{M-1}$ to the second dealer;

whereby the first and second dealers are provided with the shares necessary to reconstruct the transformed vectors $\boldsymbol{U_i} = (U_{i,0}, U_{i,1}, \dots, U_{i,M-1}), \boldsymbol{V_i} = (V_{i,0}, V_{i,1}, \dots, V_{i,M-1}), i \in$ {0, ..., $N$ - 1}, respectively; and

whereby the j-th computing node ends up with all the shares necessary to reconstruct $U_{i,j}$ and $V_{i,j}$, for $i \in$ {0, ..., $N$ - 1} without learning either $\boldsymbol{u_i} = (u_{i,0}, u_{i,1}, \dots, u_{i,M-1})$ or $\boldsymbol{v_i} = (v_{i,0}, v_{i,1}, \dots, v_{i,M-1})$.

In another embodiment, the vectors $u_i$ and $v_i$ are collaboratively generated such that each component of pair of $u_i$ and $v_i$ is a random or pseudo-random number, other than one component of $u_i$ or $v_i$ which is chosen so that the condition: $\sum_{i=0}^{N-1} \sum_{j=1}^{M-1} u_{i,j} \cdot v_{i,j} = 0$ holds.

In a further embodiment, the vectors $u_i$ and $v_i$ are generated inside a trusted execution environment and communicated in encrypted form to the first and second dealer nodes respectively.

In a third aspect there is provided a computer-implemented method of performing a multi-party computation by a network of data processors, said data processors comprising first and second dealer nodes, a plurality of M computing nodes, and at least one result node, the method comprising:

(a) the first dealer node constructing a first set of N M-dimensional vectors $\{u_0, u_1 \dots, u_{N-1}\}$ from a first private input vector $\boldsymbol{x} = (x_0, x_1, \dots, x_{N-1})$ where:

$$u_0 = \left(x_0, u_{0,1}, \dots, u_{0,M-1}\right),$$

$$u_1 = \left(x_1, u_{1,1}, \dots, u_{1,M-1}\right), \dots,$$

$$u_{N-1} = \left(x_{N-1}, u_{N-1,1}, \dots, u_{N-1,M-1}\right),$$

(b) the second dealer node constructing a second set of N M-dimensional vectors $\{v_0, v_1 \dots, v_{N-1}\}$ from a second private input vector $y = (y_0, y_1, \dots, y_{N-1})$ where:

$$v_0 = \left(y_0, v_{0,1}, \dots, v_{0,M-1}\right),$$

$$v_1 = \left(y_1, v_{1,1}, \dots, v_{1,M-1}\right), \dots,$$

$$v_{N-1} = \left(y_{N-1}, v_{N-1,1}, \dots, v_{N-1,M-1}\right),$$

wherein the vector components $u_{i,j}$ and $v_{i,j}$ satisfy the condition:

$$\sum_{i=0}^{N-1} \sum_{j=1}^{M-1} u_{i,j} \cdot v_{i,j} = 0$$

(c) the first dealer node computing a respective transformed vector $\boldsymbol{U_i} = (U_{i,0}, U_{i,1}, \dots, U_{i,M-1})$ of each M-dimensional vector $u_i$ of said first set, according to a discrete linear transform for which Parseval's theorem holds;

(d) the second dealer node computing a respective transformed vector $\boldsymbol{V_i} = (V_{i,0}, V_{i,1}, \dots, V_{i,M-1})$ of each M-dimensional vector $v_i$ of said second set, according to said discrete linear transform;

(e) for each transformed vector $\boldsymbol{U_i}$ for $i \in \{0, \dots, N-1\}$, the first dealer sending the j-th component $U_{i,j}$ to the j-th computing node for j $\in \{0, \dots, M-1\}$;

(f) for each transformed vector $\boldsymbol{V_i}$ for $i \in \{0, \dots, N-1\}$, the second dealer sending the j-th component $V_{i,j}$ to the j-th computing node for j $\in \{0, \dots, M-1\}$;

(g) for each $j \in \{0, \dots, (M-1)\}$, the j-th computing node computing from the received components $\boldsymbol{U_{i,j}}$ and $\boldsymbol{V_{i,j}}$ for i $\in \{0, \dots, N-1\}$ a result share $R_j$ where

$$R_j = \frac{1}{M} \sum_{i=0}^{N-1} U_{i,j} \cdot V_{i,j}$$

(k) for each $j \in \{0, ..., (M - 1)\}$, the j-th computing node sending the result share $R_j$ to one or more of the one or more result nodes;

(l) said one or more result nodes calculating, from the M received result shares $R_j$ for $j \in \{0, ..., M - 1\}$, the inner product of the first and second private input vectors $x, y$ as:

$$< x, y > = \sum_{j=0}^{M-1} R_j$$

In this aspect we again make use of a transform for which Parseval's theorem holds, the method allowing the dealer nodes to compute blinded vectors which can be shared without revealing the private input vectors (i.e. the secrets). The computing nodes can then use shares of the blinded vectors to individually calculate result shares, without access to the secrets, and those result shares can be combined to compute the inner product of those secrets.

In an embodiment, the first dealer node and second dealer node are programmed with rules to ensure that for any corresponding pair of vector components $u_{i,j}$ and $v_{i,j}$ one of the pair is zero.

Preferably, said rules ensure that for each $i \in \{0, ...,N - 1\}$, the indices $j \in \{0, ..., (M - 1)\}$ are allocated between the first and second dealer nodes, with the first dealer node being allocated a first subset of indices for which the components $u_{i,j}$ are zero, and the second dealer node being allocated a second subset of indices for which the components $v_{i,j}$ are zero, and wherein the union of the first and second subsets is the set $\{0, ..., (M - 1)\}$.

Preferably, the first and second dealer nodes are programmed to set all components whose indices are not part of the first subset or second subset respectively allocated to that node to a random value.

In another embodiment, the first dealer node and second dealer node are programmed with rules to ensure that for each $i \in \{0, ..., N - 1\}$, a first subset of indices $j \in \{0, ..., (M - 1)\}$ are allocated for the first dealer node to set the vector components $u_{i,j}$ equal to one, and a second subset of indices $j \in \{0, ..., (M - 1)\}$ are allocated for the second dealer node to set the vector components $v_{i,j}$ equal to one, with each dealer node setting the remaining components of its respective vector $u_i$ or $v_i$ to sum to zero.

Preferably, each dealer node setting the remaining components of its respective vector $u_i$ or $v_i$ to sum to zero comprises setting a portion of the remaining components to a random value and the remainder of the remaining components to a value or values that ensure the aggregate remaining components sum to zero.

In another embodiment, the first and second dealer nodes run a pseudo-random generator in sync with one another, and wherein the values of the components $u_{i,j}$ and $v_{i,j}$ are identical and wherein at least one vector component is computed by at least one dealer node to ensure that

$$\sum_{i=0}^{N-1} \sum_{j=1}^{M-1} u_{i,j} \cdot v_{i,j} = 0$$

For each aspect of the invention set out above, in some preferred embodiments, the private input vectors have integer components and arithmetical operations are performed modulo a prime number $p$.

Preferably, the discrete linear transform for which Parseval's theorem holds is selected from:

- the Number Theoretic Transform (NTT);
- the Fermat Number Transform (FNT);
- the Mersenne Number Transform (MNT);
- the Discrete Fourier Transform;
- the Z-Transform;
- the Discrete Hartley Transform;
- the Discrete Wavelet Transform with arbitrary orthogonal wavelet bases, such as Haar, Daubechies, Simlets, Coiflets, Meyer, Morlet and Gaussian wavelet families.

In other embodiments, the private input vectors can have real or complex number components.

The scope of protection is defined by the appended claims.

Brief Description of the Drawings

Fig. 1 is a network diagram of a conventional SMPC network of dealer nodes, computing nodes and result nodes;

Fig. 2 is a message sequence chart showing the flows of messages between nodes in the protocol 2-NMC with Blinding Vectors;

Fig. 3 is a message sequence chart showing the flows of messages between nodes in the protocol 2-NMC with Blinding Sums;

Fig. 4 is a diagram illustrating the message flows involving a single computing node during a pre-processing stage usable with the protocol 2-NMC with Blinding Sums;

Fig. 5 is a message sequence chart showing the flows of messages between nodes during a different pre-processing stage usable with the protocol 2-NMC with Blinding Sums; and

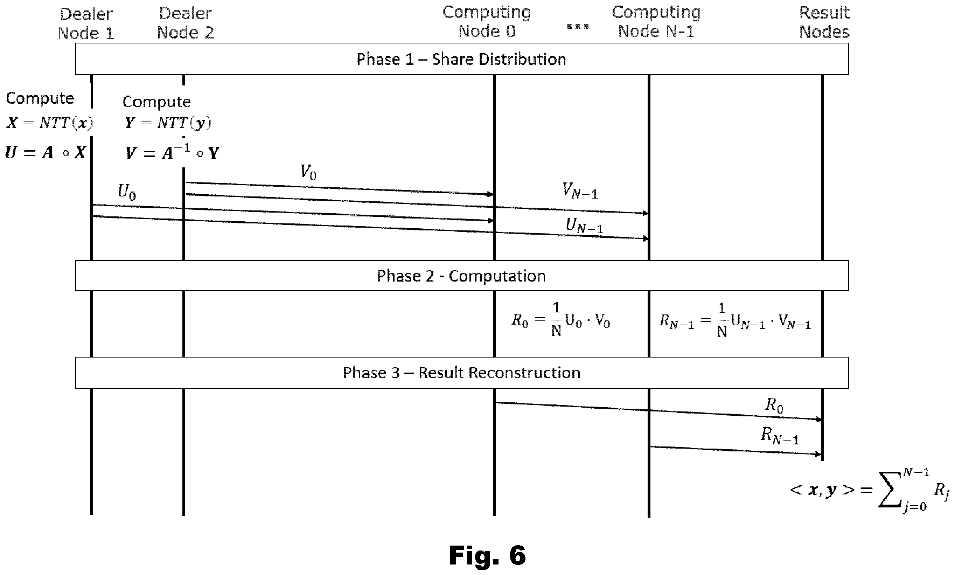

Fig. 6 is a message sequence chart showing the flows of messages between nodes in the protocol 2-NMC with Blinding Products.

Detailed Description of Preferred Embodiments

We recall from the introduction that the inner product, scalar product or dot product of two N-dimensional vectors $x = (x_0, x_1,..., x_{N-1})$ and $y = (y_0, y_1,..., y_{N-1})$, represented as <x,y> is defined as:

$$< \mathrm{x}, \mathrm{y} > \ = \sum_{i=0}^{N-1} x_i \cdot y_i \qquad \text{Eq. 1}$$

The inner product requires the computation of N products in the arithmetic setting, and it also requires the computation of AND gates in the Boolean setting. This is therefore an example of a *nontrivial* function that leads to a slow evaluation in SMPC caused by the amount of bandwidth and the number of messages that computing nodes require to exchange. In this invention we present three new SMPC protocols which can compute the inner product between two vectors without the computing nodes having to exchange any message during the computation phase (Phase 2). These protocols allow computing in SMPC inner products between high dimensional vectors using a large number of computing nodes in essentially the same time as it would take in a centralized computation where both vectors are handled in clear in a server. We call these three protocols:

- 2-NMC with Blinding Vectors,
- 2-NMC with Blinding Sums, and
- 2-NMC with Blinding Products,

where NMC stands for Nil-Message Compute.
In the initial explanation of the three protocols we describe an implementation working with finite field arithmetic Z/pZ. That is, secrets are all represented as integers modulo p, where p is a prime number. All the computations that follow are therefore performed modulo p, represented as *mod p*. In what follows, sometimes we drop *mod p* for the sake of simplicity, but we will work with modular arithmetic unless explicitly stated.
The protocols make use of a discrete linear transform for which Parseval's theorem holds. The initial implementation, using finite field arithmetic Z/pZ, makes use of the Number Theoretic Transform (NTT) and its inverse, INTT. However, the skilled person should be aware in the description that follows that the NTT can be replaced by any other discrete linear transform for which Parseval's theorem holds.
In particular, it is envisaged that the different protocols can replace the use of NTT by any of the following:

- The Fermat Number Transform (FNT) is used, whereby the modulus is a Fermat number Ft of the type Ft = 2b+1, where b = 2t, t=0,1,2,...
- The Mersenne Number Transform is used, whereby the modulus is a Mersenne number Mt of the type Mt = 2q-1, where q is prime. In another setting the modulus is not a prime number.
- The Discrete Fourier Transform is used, whereby the vectors can be of complex numbers.
- The Z-Transform is used, whereby the vectors can be of complex numbers.
- The Discrete Hartley Transform is used, whereby the vectors can be of real numbers.

- The Discrete Wavelet Transform is used with arbitrary orthogonal wavelet bases (tight frames), such as Haar, Daubechies, Simlets, Coiflets, Meyer, Morlet and Gaussian wavelet families, whereby the vectors can be of complex numbers.

Furthermore the skilled person should bear in mind in what follows that while the protocols are described in terms of the private inputs known to a first dealer node and second dealer node, and while these dealer nodes may be distinct entities, the protocols are also applicable in cases where the two dealer nodes are not representative of different individuals, organisations, devices, computer systems, etc. For example, the two dealers may correspond to the same individual, organisation, device, etc., e.g. if dealer 1 is a user providing information about their face whilst signing up for an account, and dealer 2 is the same user who provides information about their face at login time (e.g. a day later).

We present, as different aspects of the present disclosure, three novel SMPC protocols that allow computing an inner product without requiring the nodes to exchange any message during the computation phase. Let us assume that two dealer nodes wish to compute the inner product between two vectors $x = (x_0, x_1, ..., x_{N-1})$ and $y = (y_0, y_1, ... , y_{N-1})$, whereby each dealer has one of the two vectors. Each dealer wants to keep their vector private and have a network of computing nodes evaluate the result from the inner product. The new SMPC protocols operate in the usual three phases: (1) share distribution, (2) computation, and (3) result reconstruction. We present the protocols in the following order:

1) 2-NMC with Blinding Vectors
2) 2-NMC with Blinding Sums
3) 2-NMC with Blinding Products

The characteristics of these protocols are summarised in the table below:

|  | 2-NMC with Blinding Vectors | 2-NMC with Blinding Sums | 2-NMC with Blinding Products |
|---|---|---|---|
| **Nodes exchange messages during the Computation phase in SMPC** | No | No | No |
| **Requires Pre-processing phase in SMPC** | No | Yes | Yes |
| **Number of shares required to store N secrets in M computing nodes, assuming M>=N** | $N \cdot M$ | $M$ | $M$ |

The initially described implementation of all of the protocols are based on the Number Theoretic Transform (NTT), a specialization of the Discrete Fourier Transform (DFT) to the finite field $Z/pZ$ of integers module a prime $p$.

Let $\alpha$ denote a root of unity of order N such that, $\alpha^N = 1 \ (mod \ p)$. The NTT of a vector $u = (u_0, u_1, ..., u_{N-1})$ and its inverse NTT (or INTT) are defined as follows:

$$\{NTT(\boldsymbol{u})\}_k = \{\boldsymbol{U}\}_k = \sum_{n=0}^{N-1} u_n \cdot \alpha^{nk} \ mod \ p, k = 0, 1, ..., N-1$$

$$\{INTT(\boldsymbol{U})\}_n = \{\boldsymbol{u}\}_n = \left( \frac{1}{N} \sum_{k=0}^{N-1} U_k \cdot \alpha^{-nk} \right) mod \ p, n = 0, 1, ..., N-1$$

That is, the NTT of a vector $\boldsymbol{u} = (u_0, u_1, ..., u_{N-1})$ is just another vector $\boldsymbol{U} = (U_0, U_1, ..., U_{N-1})$ of equal dimension.

Notice that the NTT is linear, that is:

$$NTT(\lambda \cdot \boldsymbol{u} + \mu \cdot \boldsymbol{v}) = \lambda \cdot NTT(\boldsymbol{u}) + \mu \cdot NTT(\boldsymbol{v})$$

where $\lambda$ and $\mu$ are scalars. This property is fundamental for building a linear secret sharing mechanism based on the NTT.

Parseval's Theorem for the NTT states:

$$< \boldsymbol{a}, \boldsymbol{b} > \triangleq \sum_{n=0}^{N-1} a_n \cdot b_n = \frac{1}{N} \sum_{k=0}^{N-1} A_k \cdot B_k = \frac{1}{N} < \boldsymbol{A}, \boldsymbol{B} >$$

Eq. 2

where $\alpha$, $\boldsymbol{b}$ are N-dimensional vectors and $\boldsymbol{A} = NTT(\boldsymbol{a})$, and $\boldsymbol{B} = NTT(\boldsymbol{b})$ are their NTTs. This theorem establishes a relationship between sums of products of numbers and sums of products of their NTTs.

We now describe in turn the three protocols.

## Protocol: 2-NMC with Blinding Vectors

Inputs: 2 dealer nodes, whereby dealers 1 and 2 contribute, respectively, with private inputs $\boldsymbol{x} = (x_0, x_1, ..., x_{N-1})$ and $\boldsymbol{y} = (y_0, y_1, ..., y_{N-1})$ to the computation of an inner product given by Eq. 1

Output: R result nodes reconstruct the inner product, which is computed by M computing nodes that are not able to see any of the input secrets.

Purpose: M computing nodes can jointly evaluate any arithmetic function with two dealers without any message exchange during the computation phase.

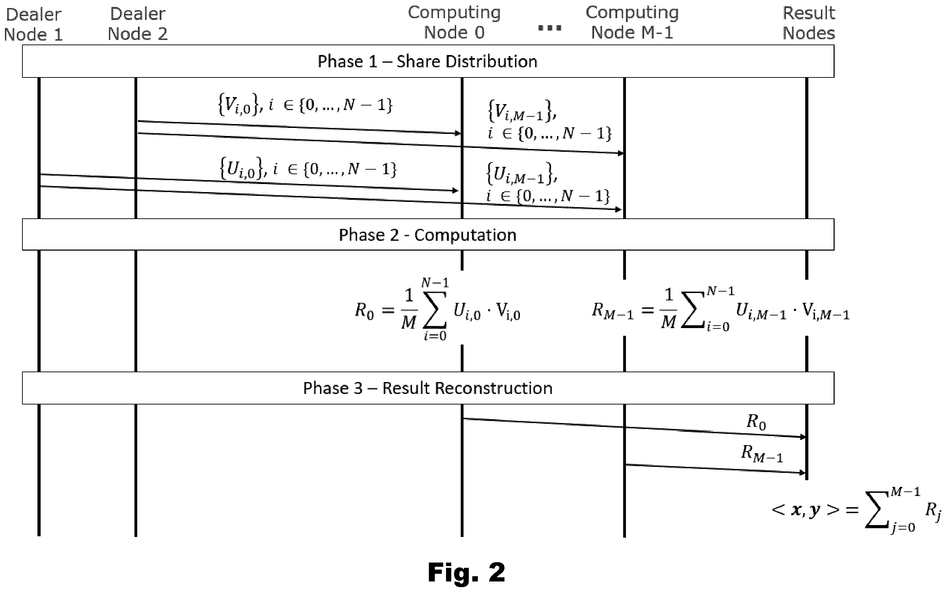

Fig. 2 provides a message sequence diagram showing the messages sent between the dealer nodes, computing nodes and result nodes, as detailed below.

SMPC Phase 1: Share Distribution.

- Step 1: Dealers 1 and 2 construct $N$ M-dimensional vectors with their secret inputs

$$\boldsymbol{u_0} = \left( x_0, u_{0,1}, ..., u_{0,M-1} \right),$$

$$\boldsymbol{u_1} = \left( x_1, u_{1,1}, ..., u_{1,M-1} \right), ...,$$

$$\boldsymbol{u_{N-1}} = \left( x_{N-1}, u_{N-1,1}, ..., u_{N-1,M-1} \right),$$

and

$$\boldsymbol{v_0} = \left( y_0, v_{0,1}, ..., v_{0,M-1} \right),$$

$$\boldsymbol{v_1} = \left( y_1, v_{1,1}, ..., v_{1,M-1} \right), ...,$$

$$\boldsymbol{v_{N-1}} = \left( y_{N-1}, v_{N-1,1}, ..., v_{N-1,M-1} \right),$$

respectively, such that:

$$\sum_{i=0}^{N-1} \sum_{j=1}^{M-1} u_{i,j} \cdot v_{i,j} = 0$$

Eq. 3

- Step 2: Dealers 1 and 2 compute the NTT of each one of their N vectors:

$$U_i = NTT(u_i) = \left(U_{i,0}, U_{i,1}, \dots, U_{i,M-1}\right)$$
$$V_i = NTT(v_i) = \left(V_{i,0}, V_{i,1}, \dots, V_{i,M-1}\right) \quad i \in \{0, \dots, N-1\}$$

where $U_{i,j}$ and $V_{i,j}$ are the j-th share of the i-th secret $x_i$ and $y_i$ from Dealers 1 and 2, respectively.
- Step 3: Dealers 1 and 2 send the j-th share of each secret to the j-th computing node, for each $j \in \{0, \dots, M - 1\}$.

At the end of this phase, the j-th computing node ends up with shares $U_{i,j}$ and $V_{i,j}$ for $i \in \{0, \dots, N - 1\}$.

SMPC Phase 2 - Computation.

The j-th computing node calculates from the local shares it has received:

$$R_j = \frac{1}{M} \sum_{i=0}^{N-1} U_{i,j} \cdot V_{i,j}$$

Eq. 4

SMPC Phase 3 - Result Reconstruction.

The j-th computing node sends $R_j$ in Eq. 4 to one or several result nodes, which then reconstruct the inner product as follows:

$$< x, y > = \sum_{j=0}^{M-1} R_j$$

This ends the description of the Protocol 2-NMC with Blinding Vectors. We now prove the correctness of Eq. 4, and how privacy can be assured before describing details of some of the implementations for the pre-processing phase.

Proof of Equation 4

We want to compute $< x, y >$. We have that:

$$\sum_{i=0}^{N-1} < u_i, v_i > =$$
$$\sum_{i=0}^{N-1} \left( x_i \cdot y_i + \sum_{j=1}^{M-1} u_{i,j} \cdot v_{i,j} \right) =$$
$$\sum_{i=0}^{N-1} x_i \cdot y_i + \sum_{i=0}^{N-1} \sum_{j=1}^{M-1} u_{i,j} \cdot v_{i,j} =$$
$$< x, y >$$

where the last step derives from Eq. 3. Therefore, applying Parseval's theorem (Eq. 2) to every term $< u_i, v_i >$ we have that

$$< u_i, v_i > = \frac{1}{M} \sum_{j=0}^{M-1} U_{i,j} \cdot V_{i,j}$$

and so, from the equation above:

$$< x, y >= \frac{1}{M} \sum_{i=0}^{N-1} \sum_{j=0}^{M-1} U_{i,j} \cdot V_{i,j}$$

We can rewrite this equation as $< x, y > = \sum_{j=0}^{M-1} R_j$, where $R_j = \frac{1}{M} \sum_{i=0}^{N-1} U_{i,j} \cdot V_{i,j}$. Hence, each computing node j just needs to compute Eq. 4 to obtain the j-th term $R_j = \frac{1}{M} \sum_{i=0}^{N-1} U_{i,j} \cdot V_{i,j}$, and a result node just needs to add all $R_j$ to reconstruct $< x, y >$.

Privacy

Notice also that according to the INTT, a vector $u_i = (x_i, u_{i,1},...,u_{i,M-1})$ and its transformed vector $U_i = (U_{i,0}, U_{i,1},..., U_{i,M-1})$, $i \in \{0, ...,N - 1\}$ are related through a linear system of M equations and M unknowns:

$$\begin{pmatrix} U_{i,0} \\ U_{i,1} \\ \vdots \\ U_{i,M-1} \end{pmatrix} = \begin{pmatrix} 1 & 1 & ... & 1 \\ 1 & \alpha & ... & \alpha^{(M-1)} \\ \vdots & \vdots & \ddots & \vdots \\ 1 & \alpha^{(M-1)} & ... & \alpha^{(M-1)^2} \end{pmatrix} \begin{pmatrix} x_i \\ u_{i,1} \\ \vdots \\ u_{i,M-1} \end{pmatrix} \qquad \text{Eq. 5}$$

Any bad actor gathering a subset of R transformed values $\{U_i\}$ with $U_i = (U_{i,0}, U_{i,1},..., U_{i,M-1})$ being the NTT of $u_i = (x_i, u_{i,1},..., u_{i,M-1})$, where $R \leq M - 1$ will end up with a consistent but underdetermined linear system of equations with rank $R$. This system has an infinite number of solutions, with the general solution having $F$ free parameters, where $F$ is the difference between the number of variables $M$ and the number of gathered transformed values $R$, that is, $F = M - R$. This means that a bad actor can only determine that there are infinite possible values for $x_i$, all equally probable. The same argument applies to any vector $v_i = (y_i, v_{i,1},..., v_{i,M-1})$, $i \in \{0, ... , N - 1\}$.

We now proceed to describe different embodiments (or "settings") that allow satisfying the condition given by Eq. 3 in Phase 1.

Setting 1: Setting opposing coordinates in vectors $u_i$ and $v_i$ to 0

Let us assume that M-1 is even. In this setting, in Step 1 in Phase 1 of Protocol 2-NMC with Blinding Vectors, dealers 1 and 2 agree to set $u_{i,1},...,u_{i,(M-1)/2}$ and $v_{i,(M-1)/2+1},...,v_{i,M-1}$ to zero. That is, vectors $u_i$ and $v_i$ are of the form:

$$u_i = \left(x_i, 0, ...,0, u_{i,(M-1)/2+1}, ... , u_{i,M-1}\right),$$

$$v_i = \left(y_i, v_{i,1}, ... , v_{i,(M-1)/2}, 0, ...,0\right\},$$

where $u_{i,(M-1)/2+1},...,u_{i,M-1}$ and $v_{i,1},...,v_{i,(M-1)/2}$ are all random.

Notice that in this setting Eq. 3 holds since all products between opposing components other than the first one contains a zero. In a related setting, dealers 1 and 2 agree on a different arrangement of 0's. Any arrangement whereby opposing components other than the first one contains a zero is valid.

Setting 2: Setting opposing coordinates in vectors $u_i$ and $v_i$ to 1

Let us assume that M-1 is even. In this setting, in Step 1 in Phase 1 of Protocol 2-NMC with Blinding Vectors, dealers 1 and 2 agree to set $u_{i,2j+1} = 1$ and $v_{i,2j} = 1$ for all values of j and i. Then dealers 1 and 2 randomly and independently generate the rest of their vector, except for the last coordinate which is chosen so that, respectively:

$$\sum_{i=0}^{N-1} \sum_{j=1}^{(M-1)/2} u_{i,2j} = 0$$

$$\sum_{i=0}^{N-1} \sum_{j=0}^{(M-1)/2-1} v_{i,2j+1} = 0$$

Notice that these conditions imply Eq. 3, since:

$$\sum_{i=0}^{N-1} \sum_{j=1}^{M-1} u_{i,j} \cdot v_{i,j} =$$

$$\sum_{i=0}^{N-1} \sum_{j=1}^{(M-1)/2} u_{i,2j} \cdot v_{i,2j} + \sum_{i=0}^{N-1} \sum_{j=0}^{(M-1)/2-1} u_{i,2j+1} \cdot v_{i,2j+1} =$$

$$\sum_{i=0}^{N-1} \sum_{j=1}^{(M-1)/2} u_{i,2j} + \sum_{i=0}^{N-1} \sum_{j=0}^{(M-1)/2-1} v_{i,2j+1} =$$

$$= 0$$

Here we are assuming that (M-1) is even. If it is odd, the conditions become

$$\sum_{i=0}^{N-1} \sum_{j=1}^{(M-2)/2} u_{i,2j} = 0 \text{ and } \sum_{i=0}^{N-1} \sum_{j=0}^{(M-2)/2} v_{i,2j+1} = 0.$$

The advantage of this setting is that it allows dealers 1 and 2 to independently (i.e., with no communication) set up their vectors $u_i$, and $v_i$, respectively.

In a related setting, dealers 1 and 2 agree on a different arrangement of 1's. For example, $u_i$ has the even values in j equal to 1 and $v_i$ the odd ones. In another example, $u_i$ has the first half of (M-1)/2 values in j equal to 1 and $v_i$ the second half. Other arrangements are possible. The important condition is that in each product $u_{i,j} \cdot v_{i,j}$ one of the two vector components is equal to 1.

Setting 3: Pseudo-random number generators in sync

In this set setting up, in Step 1 in Phase 1 of Protocol 2-NMC with Blinding Vectors, dealers 1 and 2 use each one a pseudo-random number generator in sync such that they produce the same vector components. This way, dealers 1 and 2 independently generate $u_{i,j}$, $i \in \{0, ..., N - 1\}$, $j \in \{0, ..., M - 1\}$ and $v_{i,j}$, $i \in \{0, ..., N - 1\}$, $j \in \{0, ..., M - 2\}$. Then, dealer 2 sets

$$v_{N-1,M-1} = -u_{N-1,M-1}^{-1} \cdot \sum_{i=0}^{N-1} \sum_{j=0}^{M-2} u_{i,j} \cdot v_{i,j}$$

Eq. 6

so that Eq. 3 holds. As long as the two pseudo-random number generators operate in sync this setting does not require communication between the two dealers.

In a related setting, a vector component different from $v_{N-1,M-1}$ is nonrandomly chosen so that Eq. 3 holds. In a related setting it is dealer 1 the one that sets the value of a component in vector $u_i$ so that Eq. 3 holds.

Notice that the 2-NMC with Blinding Vectors Protocol requires each dealer to send $N \cdot M$ shares of their $N$ inputs (the components of their vector). That is, each secret vector component requires $M$ shares. This is the same secret-to-share ratio as observed in many other SMPC protocols such as GMW, BGW, SPDZ, BMR, and GESS.

The following two protocols allow reducing this ratio to 1. That is, $N$ secret vector components require only $N$

shares. Both protocols make use of a pre-processing phase.

**Protocol: 2-NMC with Blinding Sums**

Inputs: 2 dealer nodes, whereby dealers 1 and 2 contribute, respectively, with private inputs $x = (x_0, x_1, ..., x_{N-1})$ and $y = (y_0, y_1, ..., y_{N-1})$ to the computation of an inner product given by Eq. 1

Output: R result nodes reconstruct the inner product, which is computed by M computing nodes that are not able to see any of the input secrets.

Purpose: M computing nodes can jointly evaluate any arithmetic function with two dealers without any message exchange during the computation phase.

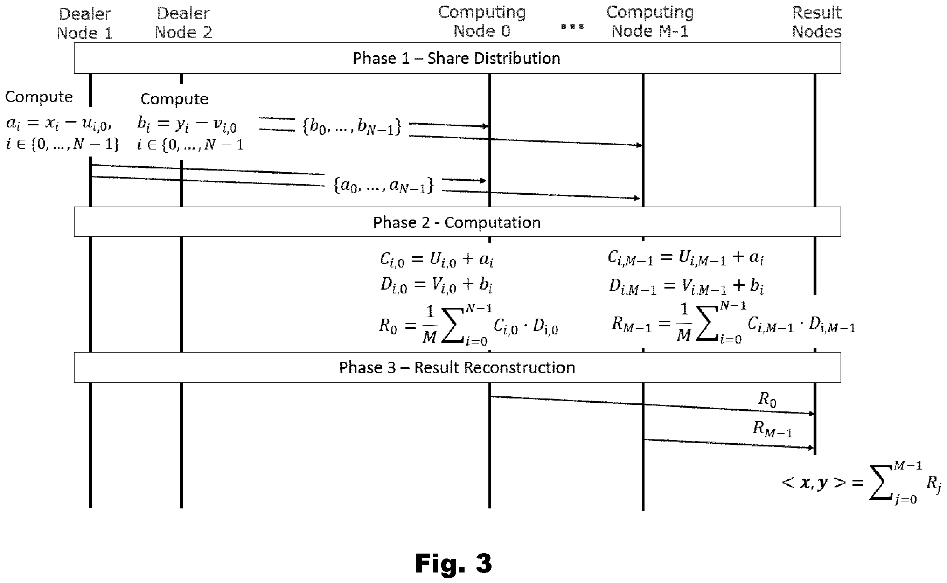

Fig. 3 provides a message sequence diagram showing the messages sent between the dealer nodes, computing nodes and result nodes, as detailed below.

SMPC Phase 0: Pre-processing.

The computing nodes and dealers 1 and 2 run a pre-processing phase such that for each $i \in \{0, ..., N-1\}$:

- Condition 1: Dealer 1 ends up with a transformed vector $\boldsymbol{U_i} = (U_{i,0}, ..., U_{i,M-1})$ with components $U_{i,j}, j \in \{0, ..., (M-1)\}$ such that its INTT is a random vector $\boldsymbol{u_i} = (u_{i,0}, u_{i,1}, ..., u_{i,M-1})$
- Condition 2: Dealer 2 ends up with a transformed vector $\boldsymbol{V_i} = (V_{i,0}, ..., v_{i,M-1})$ with components $V_{i,j}, j \in \{0, ..., (M-1)\}$ such that its INTT is a random vector $\boldsymbol{v_i} = (v_{i,0}, v_{i,1}, ..., v_{i,M-1})$
- Condition 3: The j-th computing node ends up with $U_{i,j}$ and $V_{i,j}$, for $j \in \{0, ..., M-1\}$ but knows neither $\boldsymbol{u_i} = (u_{i,0}, u_{i,1}, ..., u_{i,M-1})$ nor $\boldsymbol{v_i} = (v_{i,0}, v_{i,1}, ..., v_{i,M-1})$
- Condition 4: Vectors $\boldsymbol{u_i}$ and $\boldsymbol{v_i}$ fulfil

$$\sum_{i=0}^{N-1} \sum_{j=1}^{M-1} u_{i,j} \cdot v_{i,j} = 0$$

Eq. 3

Notice that this phase is independent of the actual private inputs $\boldsymbol{x} = (x_0, x_1, ..., x_{N-1})$ and $\boldsymbol{y} = (y_0, y_1, ..., y_{N-1})$ of the SMPC computation. For this reason, this is a pre-processing phase which can be executed before the actual SMPC computation takes place (hours, days, months, etc.), having no impact on its performance.

SMPC Phase 1: Share Distribution.

- Step 1: For each $i \in \{0, ..., N-11\}$:

    o Applying the INTT to $\boldsymbol{U_i} = (U_{i,0}, ..., U_{i,M-1})$ dealer 1 computes $u_{i,0}$ and defines a scalar $a_i = x_i - u_{i,0}$. Given that $u_{i,0}$ is unknown to the computing nodes (see Condition 3 in the pre-processing phase), $a_i$ is a blinded version of private input $x_i$

    o Applying the INTT to $\boldsymbol{V_i} = (V_{i,0}, ..., V_{i,M-1})$ dealer 2 computes $v_{i,0}$ and defines a scalar $b_i = y_i - v_{i,0}$. Given than $v_{i,0}$ is unknown to the computing nodes (see Condition 3 in the pre-processing phase), $b_i$ is a blinded version of private input $y_i$

- Step 2:

    ○ Dealer 1 sends one broadcast message to all compute nodes with the collection of blinded private inputs $\{a_0, ..., a_{N-1}\}$
    ○ Dealer 2 sends one broadcast message to all computing nodes with the collection of blinded private inputs $\{b_0, ..., b_{N-1}\}$

SMPC Phase 2 - Computation.

For $j \in \{0, ..., M-1\}$, *the j - th* computing node follows these steps:

- Step 1: For each $i \in \{0, ..., N - 1\}$, build vectors $(a_i, 0, ...,0)$, $(b_i, 0, ...,0)$ and compute their NTT $A_i = (A_{i,0}, ..., A_{i,M-1})$. $B_i = (B_{i,0}, ..., B_{i,M-1})$, which from its definition turns out to be equal to $A_i = (a_i, ..., a_i)$, $B_i = (b_i, ..., b_i)$.
- Step 2: For each $i \in \{0, ..., N - 1\}$, compute

$$C_{i,j} = U_{i,j} + A_{i,j},$$

and

$$D_{i,j} = V_{i,j} + B_{i,j}$$

- Step 3: Compute:

$$R_j = \frac{1}{M} \sum_{i=0}^{N-1} C_{i,j} \cdot D_{i,j}$$

Eq. 4

SMPC Phase 3 - Result Reconstruction.

The j-th computing node sends $R_j$ in Eq. 4 to one or several result nodes, which then reconstruct the inner product as follows:

$$< \boldsymbol{x}, \boldsymbol{y} > = \sum_{j=0}^{M-1} R_j$$

This ends the description of the Protocol 2-NMC with Blinding Sums. We now prove the correctness of Eq. 4 in this protocol, and how privacy can be assured before describing details of some of the implementations for the pre-processing phase.

Proof for Eq. 4

Let us denote by $NTT\{(h_0,...,h_{N-1})\} = (H_0, ..., H_{N-1})$ to the NTT of a vector $(h_0, ..., h_{N-1})$. From the linearity property of the NTT we have for each $i \in \{0, ..., N - 1\}$ that:

$$\begin{aligned} NTT\{(x_i, u_{i,1}, ..., u_{i,M-1})\} = \\ NTT\{(u_{i,0}, u_{i,1}, ..., u_{i,M-1}) + (a_i, 0, ...,0)\} = \\ NTT\{(u_{i,0}, u_{i,1}, ..., u_{i,M-1})\} + NTT\{(a_i, 0, ...,0)\} = \\ (U_{i,0}, ..., U_{i,M-1}) + (A_{i,0}, ..., A_{i,M-1}) = \\ (C_{i,0}, ..., C_{i,M-1}) \end{aligned}$$

That is, $\boldsymbol{C_i} = (C_{i,0}, ..., C_{i,M-1}) = (U_{i,0} + A_{i,0}, ..., U_{i,M-1} + A_{i,M-1}) = \boldsymbol{U_i} + \boldsymbol{A_i}$ is the NTT of vector $\boldsymbol{c_i} = (x_i, u_{i,1}, ..., u_{i,M-1})$. The same applies to $\boldsymbol{D_i} = (D_{i,0}, ..., D_{i,M-1}) = \boldsymbol{V_i} + \boldsymbol{B_i}$, which is the NTT of vector $\boldsymbol{d_i} = (y_i, v_{i,1}, ..., v_{i,M-1})$.
Notice that:

$$\sum_{i=0}^{N-1} < \boldsymbol{c_i}, \boldsymbol{d_i} >=$$

$$\sum_{i=0}^{N-1} \left( x_i \cdot y_i + \sum_{j=1}^{M-1} u_{i,j} \cdot v_{i,j} \right) =$$

$$\sum_{i=0}^{N-1} x_i \cdot y_i + \sum_{i=0}^{N-1} \sum_{j=1}^{M-1} u_{i,j} \cdot v_{i,j} =$$

$$< \boldsymbol{x}, \boldsymbol{y} >$$

where the last step derives from Eq. 3.

Applying Parseval's theorem (Eq. 2) to every term $< \boldsymbol{c_i}, \boldsymbol{d_i} >$ we have that:

$$< \boldsymbol{c_i}, \boldsymbol{d_i} >= \frac{1}{M} \sum_{j=0}^{M-1} C_{i,j} \cdot D_{i,j}$$

Replacing this term in the equation above we have that:

$$< \boldsymbol{x}, \boldsymbol{y} >= \frac{1}{M} \sum_{i=0}^{N-1} \sum_{j=0}^{M-1} C_{i,j} \cdot D_{i,j} =$$

$$\sum_{j=0}^{M-1} \frac{1}{M} \sum_{i=0}^{N-1} C_{i,j} \cdot D_{i,j} =$$

$$\sum_{j=0}^{M-1} R_j$$

where $R_j = \frac{1}{M} \sum_{i=0}^{N-1} C_{i,j} \cdot D_{i,j}$ . Hence, each computing node j just needs to locally compute Eq. 4 to obtain the j-th term $R_j = \frac{1}{M} \sum_{i=0}^{N-1} C_{i,j} \cdot D_{i,j}$ , and a result node just needs to add all $R_j$ to reconstruct $< \boldsymbol{x}, \boldsymbol{y} >$

Privacy

Notice that according to the NTT, a vector $\boldsymbol{c_i} = (x_i, u_{i,1}, ..., u_{i,M-1})$ and its transformed vector $\boldsymbol{C_i} = (C_{i,0}, ..., C_{i,M-1})$, $i \in \{0, ..., N - 1\}$ are related through a linear system of M equations and M unknowns:

$$\begin{pmatrix} C_{i,0} \\ C_{i,1} \\ \vdots \\ C_{i,M-1} \end{pmatrix} = \begin{pmatrix} 1 & 1 & \dots & 1 \\ 1 & \alpha & \dots & \alpha^{(M-1)} \\ \vdots & \vdots & \ddots & \vdots \\ 1 & \alpha^{(M-1)} & \dots & \alpha^{(M-1)^2} \end{pmatrix} \begin{pmatrix} x_i \\ u_{i,1} \\ \vdots \\ u_{i,M-1} \end{pmatrix} \qquad \text{Eq. 5}$$

The computing nodes only see and store components from transformed vectors. Any bad actor gathering a subset of $R$ transformed values from vector $\boldsymbol{C_i} = (C_{i,0}, ..., C_{i,M-1})$, with $R \leq M - 1$ will end up with a consistent but underdetermined linear system of equations with rank R. This system has an infinite number of solutions, with the general solution having F free parameters, where $F = M - R$ is the difference between the number of variables $M$ and the number of gathered transformed values $R$. This means that a bad actor can only determine that there are infinite possible values for $x_i$, all equally probable. The same argument applies to any vector $\boldsymbol{d_i} = (y_i, v_{i,1}, ..., v_{i,M-1})$, $i \in \{0, ..., N - 1\}$.

We now describe possible implementations or settings for the pre-processing phase in this protocol. Settings 1, 2 and 3 from protocol 2-NMC with Blinding Vectors can be easily adapted to this purpose. The main difference is that in protocol 2-NMC with Blinding Vectors the first component of vectors $\boldsymbol{u_i}$ and $\boldsymbol{v_i}$ constitute input data $x_i$ and $y_i$ to the computation, whereas in the pre-processing phase of protocol 2-NMC with Blinding Sums the first components $u_{i,0}, v_{i,0}$ of these vectors $\boldsymbol{u_i}$, $\boldsymbol{v_i}$ are random numbers. Thus, dealers 1 and 2 can proceed as follows:

- Step 1: Each dealer independently generates random values $u_{i,0}, v_{i,0}$, $i \in \{0, ..., N - 1\}$, respectively,
- Step 2: Dealers 1 and 2 execute Setting 1, 2, or 3 from protocol 2-NMC with Blinding Vectors to complete, respectively, N vectors

$$\boldsymbol{u_i} = \left(u_{i,0}, u_{i,1}, ..., u_{i,M-1}\right)$$

$$\boldsymbol{v_i} = \left(v_{i,0}, v_{i,1}, ..., v_{i,M-1}\right)$$

such that Eq. 3 holds.
- Step 3: Dealers 1 and 2 compute the NTT of each one of their N vectors:

$$\boldsymbol{U_i} = NTT(\boldsymbol{u_i}) = \left(U_{i,0}, U_{i,1}, ..., U_{i,M-1}\right)$$
$$\boldsymbol{V_i} = NTT(\boldsymbol{v_i}) = \left(V_{i,0}, V_{i,1}, ..., V_{i,M-1}\right) \quad i \in \{0, ..., N-1\}$$

- Step 3: Dealers 1 and 2 send $U_{i,j}$ and $V_{i,j}$ for $i \in \{0, ..., N - 1\}$ to the j-th computing node, for each $j \in \{0, ..., M - 1\}$.

In these three settings dealers 1 and 2 compute $\boldsymbol{U_i}$ and $\boldsymbol{V_i}$, and then distribute their components $U_{i,j}$ and $V_{i,j}$ among the computing nodes. In other settings, it might be desirable for the computing nodes to be the ones that collaboratively compute $\boldsymbol{U_i}$ and $\boldsymbol{V_i}$, as described in the following two settings.

We denote by $[s]_j$ to the j-th SSS (Shamir's Secret Sharing) share from a private input s. We also simplify notation and denote by

$$\begin{pmatrix} \lambda_{0,0} & \cdots & \lambda_{0,M-1} \\ \vdots & \ddots & \vdots \\ \lambda_{M-1,0} & \cdots & \lambda_{M-1,M-1} \end{pmatrix}$$

to the linear transform matrix from the NTT given by Eq. 5. Both, the NTT and SSS operate modulo the same prime number p. The computing nodes all agree on a public polynomial $p(\alpha)$ such that $p(0) = 0$ and according to SSS the j-th node is assigned a public abscissa $\alpha_j$.

Setting 4: BGW with opposing zeros

In this setting, the computing nodes collaboratively generate vectors $\boldsymbol{u_i}$ and $\boldsymbol{v_i}$ of the form:

$$\boldsymbol{u_i} = \left(u_{i,0}, 0, ..., 0, u_{i,(M-1)/2+1}, ..., u_{i,M-1}\right),$$

$$\boldsymbol{v_i} = \left(v_{i,0}, v_{i,1}, ..., v_{i,(M-1)/2}, 0, ..., 0\right\},$$

where $u_{i,0}, u_{i,(M-1)/2+1}, ..., u_{i,M-1}$ and $v_{i,0}, v_{i,1}, ..., v_{i,(M-1)/2}$ are all random. The computing nodes also collaboratively compute their NTT transforms $\boldsymbol{U_i}$ and $\boldsymbol{V_i}$. Notice that vectors $\boldsymbol{u_i}$ and $\boldsymbol{v_i}$ have the same structure as in Setting 1. The main difference is that here the computing nodes (and not the dealers) generate these vectors. Notice also that it is fundamental that the computing nodes are not able to access $u_{i,0}, v_{i,0}$ since in Step 2 in Phase 1 they receive $a_i$, $b_i$, which would allow them to compute the private inputs $x_i = a_i + u_{i,0}, y_i = b_i + v_{i,0}$. This setting makes use of Shamir's Secret Sharing (SSS) and BGW SMPC.

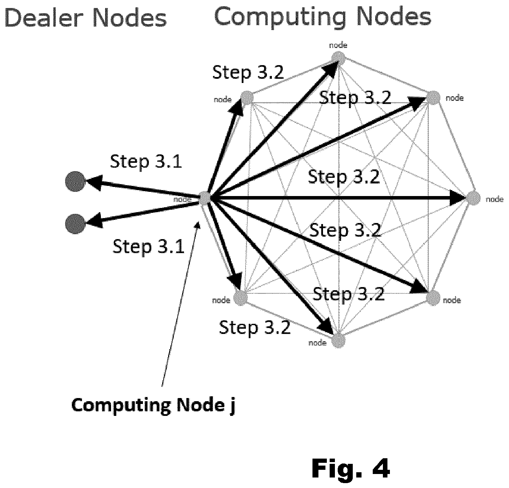

For every $i \in \{0, ..., N - 1\}$, each computing node $j \in \{0, ..., M - 1\}$ performs the following steps (see Fig. 4, which illustrates the message flows in relation to a single computing node $j$):

Step 1: Computing node $j$ locally computes its share from each component of vectors $\mathbf{u_i}$, $\mathbf{v_i}$ as follows:

- Vector $\mathbf{u_i}$:

   Share $[u_{i,q}]_j$ of component $u_{i,q}$ is randomly generated, for $q \in \{0, (M - 1)/2 + 1, ..., M - 1\}$
   Share $[0]_j$ of every zero component is obtained by evaluating $p(\alpha)$ at $\alpha = \alpha_j$

- Vector $\mathbf{v_i}$:

   Share $[v_{i,q}]_j$ of component $v_{i,q}$ is randomly generated, for $q \in \{0, 1, ..., (M - 1)/2\}$
   Share $[0]_j$ of every zero component is obtained by evaluating $p(\alpha)$ at $\alpha = \alpha_j$

Step 2: Computing node $j$ locally computes a share of each component of the transformed vectors $\mathbf{U_i} = (u_{i,0}, U_{i,1}, ..., U_{i,M-1})$, $\mathbf{V_i} = (V_{i,0}, V_{i,1}, ..., V_{i,M-1})$ applying the linearity of SSS as follows:

$$[U_{i,k}]_j = \sum_{q=0}^{M-1} \lambda_{k,q} [u_{i,q}]_j \qquad i \in \{0, ..., N-1\}, k \in \{0, ..., M-1\}$$
$$[V_{i,k}]_j = \sum_{q=0}^{M-1} \lambda_{k,q} [v_{i,q}]_j$$

Step 3: Each computing node, for every $i \in \{0, ..., N - 1\}$, $k \in \{0, ..., M - 1\}$:

- Sends its shares $[U_{i,k}]_j$, $[V_{i,k}]_j$ of the k-th component from the transformed vectors $\mathbf{U_i}$, $\mathbf{V_i}$ to the k-th computing node, for $k \in \{0, ..., M - 1\}$
- Sends its shares $[U_{i,k}]_0, ..., [U_{i,k}]_{M-1}$ to dealer 1, and its shares $[V_{i,k}]_0, ..., [V_{i,k}]_{M-1}$ to dealer 2.

Notice that Steps 1 and 2 do not require any message exchange.
At the end of this setting:

- Dealers 1 and 2 end up with all the shares necessary to reconstruct their transformed vectors $\mathbf{U_i} = (U_{i,0}, U_{i,1}, ..., U_{i,M-1})$, $\mathbf{V_i} = (V_{i,0}, V_{i,1}, ..., V_{i,M-1})$, $i \in \{0, ..., N - 1\}$, respectively
- The j-th computing node ends up with all the shares necessary to reconstruct $U_{i,j}$ and $V_{i,j}$, for $i \in \{0, ..., N - 1\}$, but knows neither $\mathbf{u_i} = (u_{i,0}, u_{i,1}, ..., u_{i,M-1})$ nor $\mathbf{v_i} = (v_{i,0}, v_{i,1}, ..., v_{i,M-1})$, and
- Eq. 3 holds. This follows from the structure of vectors $\mathbf{u_i}$ and $\mathbf{v_i}$ (see discussion in Setting 1).

Thus, all the requirements for Phase 0 in protocol 2-NMC with Blinding Sums are met.
In the steps above, the reconstruction of a number from its shares is done using SSS, typically using Lagrange polynomial interpolation.
In a related setting, the computing nodes all agree on a different public polynomial $p(\alpha)$ such that $p(0) = 0$ for each one of the zeros in vectors $\mathbf{u_i}$ and $\mathbf{v_i}$. In a related setting the zeros in vectors $\mathbf{u_i}$ and $\mathbf{v_i}$ are located in different opposing positions.

Setting 5: BGW

In this setting we adapt Setting 4 to the case in which the computing nodes collaboratively generate vectors $u_i$ and $v_i$ of the form:

$$\mathbf{u_i} = (u_{i,0}, u_{i,1}, ..., u_{i,M-1}),$$

$$v_i = \left(v_{i,0}, v_{i,1}, \ldots, v_{i,M-1}\right),$$

where all components are random numbers, except for one of them, say $v_{N-1,M-1}$, that fulfils Eq. 6:

$$v_{N-1,M-1} = -u_{N-1,M-1}^{-1} \cdot \sum_{i=0}^{N-1} \sum_{j=0}^{M-2} u_{i,j} \cdot v_{i,j}$$

Eq. 6

so that Eq. 3 holds.

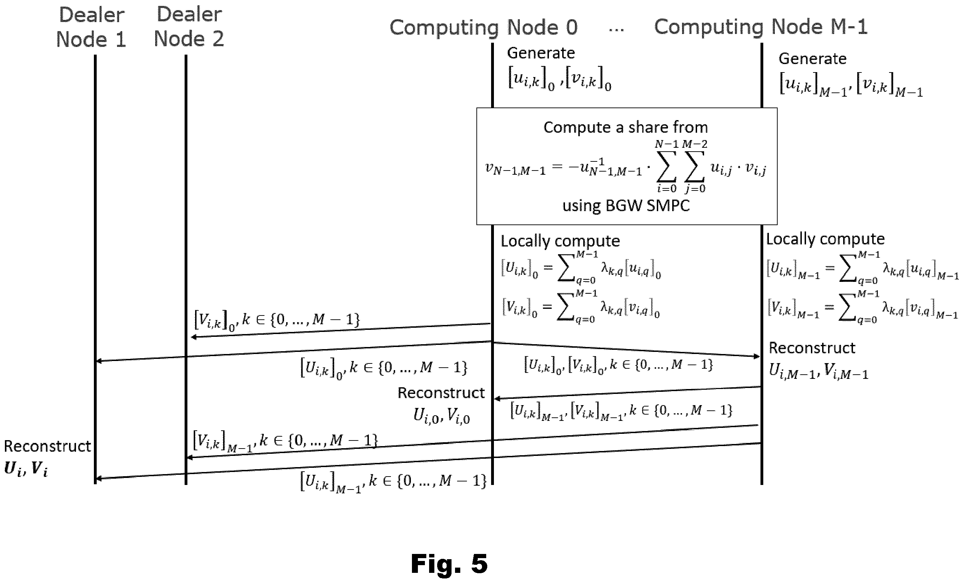

For every $i \in \{0, \ldots, N-1\}$, each computing node $j \in \{0, \ldots, M-1\}$ performs the following steps (see Fig. 5):

Step 1: Computing node $j$ computes its share from each component of vectors $u_i, v_i$ as follows:

- Vector $u_i$:
  Share $[u_{i,k}]_j$ of component $u_{i,k}$ is randomly generated, for $k \in \{0,1, \ldots, M-1\}$
- Vector $v_i$:
  Share $[v_{i,k}]_j$ of component $v_{i,k}$ is randomly generated, for $k \in \{0,1, \ldots, M-1\}$

The computing nodes run BGW SMPC, and computing node j ends up with a share $[v_{N-1,M-1}]_j$ of $v_{N-1,M-1}$ such that Eq. 6 holds. Note that this requires the evaluation in BGW of M products, M-1 of which can be computed in parallel ($\sum_{j=0}^{M-2} u_{i,j} \cdot v_{i,j}$). This requires the computing nodes to exchange messages.

Step 2: Like in Setting 4

Step 3: Like in Setting 4

In a related setting, the computing nodes run a different type of SMPC in Step 1, including BGW with Beaver's triples and SPDZ, to obtain the j-th node a share $[v_{N-1,M-1}]_j$ of $v_{N-1,M-1}$ such that Eq. 6 holds. In a related setting, a vector component different from $v_{N-1,M-1}$ is nonrandomly chosen so that Eq. 3 holds. In a related setting the value of a component in vector $u_i$ is the one nonrandomly chosen so that Eq. 3 holds.

In another setting, it might be desirable to use secure hardware, as described below.

Setting 6: Trusted Execution Environments

In this setting, a 3rd party generates vectors $u_i$, $v_i$ fulfilling Eq. 3. inside of a trusted execution environment or secure enclave and sends each one of them to a dealer in encrypted form so that only they can decrypt it using their private key.

In another setting, the computing nodes run in parallel many instances of the pre-processing phase in protocol 2-NMC with Blinding Sums so that they are ready to support the execution of a large number of Phases 1, 2 and 3 of this protocol.

**Protocol: 2-NMC with Blinding Products**

Inputs: 2 dealer nodes, whereby dealers 1 and 2 contribute, respectively, with private inputs x = $(x_0, x_1, \ldots, x_{N-1})$ and $y$ = $(y_0, y_1, \ldots, y_{N-1})$ to the computation of an inner product given by Eq. 1

Output: R result nodes reconstruct the inner product, which is computed by N computing nodes that are not able to see any of the input secrets.

Purpose: N computing nodes can jointly evaluate any arithmetic function with two dealers without any message exchange during the computation phase.

SMPC Phase 0: Pre-processing

- Step 1: Dealers 1 and 2 compute or receive the same random vector $A$ = $(A_0, A_1, \ldots, A_{N-1})$ with no components equal to zero.

- Step 2: Dealer 2 computes its inverse modulo p (which is defined since p is prime) $A^{-1} =$ $(A_0^{-1}, A_1^{-1}, ..., A_{N-1}^{-1})$

SMPC Phase 1: Share Distribution.

- Step 1: Dealers 1 and 2 compute the NTT of their vectors:

$$X = NTT(x) = (X_0, X_1, ..., X_{N-1})$$

$$Y = NTT(y) = (Y_0, Y_1, ..., Y_{N-1})$$

- Step 2: Let ∘ represent the Hadamard product:

Dealer 1 computes $U = A \circ X$,

Dealer 2 computes $V = A^{-1} \circ Y$

where $U_i$ and $V_i$ are the i-th share of vectors x and y from Dealers 1 and 2, respectively.

- Step 3: Dealers 1 and 2 send the i-th share of each secret to the i-th computing node, for each i ∈ {0, ...,N - 1}.

At the end of this phase, the i-th computing node ends up with two shares $U_i$ and $V_i$.

SMPC Phase 2 - Computation.

The j-th computing node calculates from the local shares it has received:

$$R_j = \frac{1}{N} U_j \cdot V_j$$

Eq. 4

SMPC Phase 3 - Result Reconstruction.

The j-th computing node sends $R_j$ in Eq. 4 to one or several result nodes, which then reconstruct the inner product as follows:

$$< x, y > = \sum_{j=0}^{N-1} R_j$$

This ends the description of the Protocol 2-NMC with Blinding Products. We now prove the correctness of Eq. 4 in this protocol, and how privacy can be assured before describing details of some of the implementations for the pre-processing phase.

Proof for Eq. 4

We have that:

$$\sum_{j=0}^{N-1} R_j =$$

$$\frac{1}{N}\sum_{j=0}^{N-1} U_j \cdot V_j =$$

$$\frac{1}{N}\sum_{j=0}^{N-1} A_j \cdot X_j \cdot A_j^{-1} \cdot Y_j =$$

$$\frac{1}{N}\sum_{j=0}^{N-1} X_j \cdot Y_j = < \boldsymbol{x}, \boldsymbol{y} >$$

where the last step follows from Parseval's Theorem. Thus, by adding $R_j$ one or several result nodes can reconstruct the inner product $< \boldsymbol{x}, \boldsymbol{y} >$

Privacy.

The shares are the result of multiplying component-wise the NTT by a random vector bringing privacy into this secret sharing mechanism.

Different implementations for the Pre-processing phase

We now provide different settings that describe possible ways of providing Dealers 1 and 2 with random vectors $\boldsymbol{A} = (A_0, A_1, ..., A_{N-1})$, and $\boldsymbol{A^{-1}} = (A_0^{-1}, A_1^{-1}, ..., A_{N-1}^{-1})$, respectively:

- In a currently preferred setting, Dealers 1 and 2 operate a pseudo random number generator in sync so that they are able to generate vector $\boldsymbol{A}$ without any message exchange.
- In another setting, a trusted 3$^{rd}$ party computes vector $\boldsymbol{A}$ and sends it to Dealers 1 and 2 through a secure communication channel
- In another setting, Dealers 1 and 2 generate vector $\boldsymbol{A}$ using other cryptographic techniques, including SMPC and homomorphic encryption.
- In another setting, a dealer (or a 3$^{rd}$ party) generates vector $\boldsymbol{A}$ inside of a trusted execution environment or secure enclave and sends the vector to the other dealer (or to both dealers) in encrypted form so that only they can decrypt it using their private key.
- In another setting, there is no vector $\boldsymbol{A}$ (or equivalently, $\boldsymbol{A} = (1,...,1)$).
- In another setting once $\boldsymbol{A} = (A_0, A_1, ..., A_{N-1})$ is computed or obtained by a dealer, the dealer makes use of a secret sharing mechanism in order to use the network of computing nodes to store this vector. The dealer can then reconstruct this vector at any point in time, whenever it is needed.

2-NMC with Blinding Products requires the number of computing nodes to be equal to the dimension N of the two secret vectors in the inner product. Alternatively, this limitation is removed by increasing the dimension of the secret vectors to $M$, where $M > N$, as follows:

$$\boldsymbol{x} = (x_0, x_1, ..., x_{N-1}, x_N, ..., X_{M-1})$$

$$\boldsymbol{y} = (y_0, y_1, ..., y_{N-1}, y_N, ..., y_{M-1})$$

such that

$$\sum_{i=N}^{M-1} x_i \cdot y_i = 0$$

This allows for *M* computing nodes to evaluate the inner product function of two secret vectors of dimension *N,* where $M \geq N$.

Optionally, a dealer keeps a share of every component of their secret vector so that even if all computing nodes colluded they would not be able to reconstruct the dealer's secret vector. In another embodiment, dealers 1 and 2 send the same i-th share $U_{i,j}$ and $V_{i,j}$, respectively to more than one node to achieve fault tolerance. This way, if a node holding shares $U_{i,j}$ and $V_{i,j}$ goes down, there will be other nodes with the same shares.

**Claims**

1. A computer-implemented method of performing a multi-party computation by a network of data processors, said data processors comprising first and second dealer nodes, a plurality of M computing nodes, and at least one result node, the method comprising:

   (a) providing the first dealer node with a random vector *A* having components $(A_0, A_1, ..., A_{M-1})$ all of which are non-zero;

   (b) providing the second dealer node with an inverse vector *A*<sup>-1</sup> having components $(A_0^{-1}, A_1^{-1}, ..., A_{M-1}^{-1})$,

   such that for each i ∈ {0, ...,M - 1}, the product $A_i \cdot A_i^{-1} = 1$;

   (c) the first dealer node computing a first transformed vector $X = (X_0, X_1, ..., X_{M-1})$ of a first private input vector *x* = $(x_0, x_1, ..., x_{M-1})$, according to a discrete linear transform for which Parseval's theorem holds;

   (d) the first dealer node computing a first blinded vector *U* as $U = A \circ X$ where the operator ∘ represents the Hadamard product;

   (e) the second dealer node computing a second transformed vector $Y = (Y_0, Y_1, ..., Y_{M-1})$ of a second private input vector *y* = $(y_0, y_1, ..., y_{M-1})$, according to said discrete linear transform;

   (f) the second dealer node computing a second blinded vector *V* as $V = A^{-1} \circ Y$ where the operator ∘ represents the Hadamard product;

   (g) the first dealer sending the i-th share $U_i$ of the first blinded vector *U* to the i-th computing node for each i ∈ {0, ..., *M* - 1};

   (h) the second dealer sending the i-th share $V_i$ of the second blinded vector *V* to the i-th computing node for each i E {0, ..., *M* - 1};

   (i) for each $j \in \{0, ..., (M - 1)\}$, the j-th computing node:

   - calculating from its received components $U_j$ and $V_j$ a result share

   $$R_j = \frac{1}{M} U_j \cdot V_j,$$

   and
   - sending the result share $R_j$ to one or more of the one or more result nodes;

   (j) said one or more result nodes calculating, from the M received result shares $R_j$ for j ∈ {0, ..., *M* - 1}, the inner product of the first and second private input vectors *x, y* as:

   $$<x, y> = \sum_{j=0}^{M-1} R_j$$

2. A method according to claim 1, wherein the first and second dealer nodes generate the first and second private input vectors *x* and *y* of dimension M, respectively, as expansions of original unexpanded private input vectors $x_{orig}$ and $y_{orig}$ of dimension N, respectively, where N < M, and where:

$$\boldsymbol{x_{orig}} = (x_0, x_1, \dots, x_{N-1})$$

$$\boldsymbol{y_{orig}} = (y_0, y_1, \dots, y_{N-1})$$

$$\boldsymbol{x} = (x_0, x_1, \dots, x_{N-1}, x_N, \dots, x_{M-1})$$

$$\boldsymbol{y} = (y_0, y_1, \dots, y_{N-1}, y_N, \dots, y_{M-1})$$

and where the components $x_N, \dots, x_{M-1}$ and $y_N, \dots, y_{M-1}$ are chosen such that:

$$\sum_{i=N}^{M-1} x_i \cdot y_i = 0$$

3. A method according to claim 1 or 2, wherein the steps of providing the first and second dealers with the random vectors $\boldsymbol{A}$ and $\boldsymbol{A^{-1}}$ comprise both dealers operating a pseudo-random number generator in sync to generate the components of vector $\boldsymbol{A}$, and the second dealer node calculating $\boldsymbol{A^{-1}}$ from the vector $\boldsymbol{A}$.

4. A method according to claim 1 or 2, wherein the steps of providing the first and second dealers with the random vectors $\boldsymbol{A}$ and $\boldsymbol{A^{-1}}$ comprise a trusted third party node communicating vector $\boldsymbol{A}$ to the first dealer node and either vector $\boldsymbol{A}$ or vector $\boldsymbol{A^{-1}}$ to the second dealer node.

5. A method according to claim 1 or 2, wherein the steps of providing the first and second dealers with the random vectors $\boldsymbol{A}$ and $\boldsymbol{A^{-1}}$ comprise communicating either vector $\boldsymbol{A}$ or vector $\boldsymbol{A^{-1}}$ cryptographically to at least one of the first and second dealer nodes.

6. A method according to any preceding claim wherein the vector A is {1, 1, ..., 1}.

7. A method according to any preceding claim, wherein the private input vectors have integer components and arithmetical operations are performed modulo a prime number $\boldsymbol{p}$.

8. A method according to any preceding claim, wherein the discrete linear transform for which Parseval's theorem holds is selected from:

     - the Number Theoretic Transform (NTT);
     - the Fermat Number Transform (FNT);
     - the Mersenne Number Transform (MNT);
     - the Discrete Fourier Transform;
     - the Z-Transform;
     - the Discrete Hartley Transform;
     - the Discrete Wavelet Transform with arbitrary orthogonal wavelet bases, such as Haar, Daubechies, Simlets, Coiflets, Meyer, Morlet and Gaussian wavelet families.

9. A method according to any preceding claim, wherein the private input vectors have real or complex number components.

**Patentansprüche**

1. Computerimplementiertes Verfahren zum Durchführen einer Mehrparteienberechnung durch ein Netzwerk von Datenprozessoren, wobei die Datenprozessoren einen ersten und zweiten Geberknoten, eine Vielzahl von M Rechenknoten und mindestens einen Ergebnisknoten umfassen, wobei das Verfahren Folgendes umfasst:

(a) Bereitstellen eines Zufallsvektors $A$ , der Komponenten $(A_0, A_1, ... , A_{M-1})$ aufweist, von denen alle ungleich Null sind, für den ersten Geberknoten;

(b) Bereitstellen eines inversen Vektors, der Komponenten $(A_0^{-1}, A_1^{-1}, ..., A_{M-1}^{-1})$ aufweist, für den zweiten Geberknoten $A^{-1}$, sodass für jedes $i \in$ {0,...,M-1} das Produkt $A_i \cdot A_i^{-1} = 1$ gilt;

(c) Berechnen eines ersten transformierten Vektors $X = (X_0, X_1, ... , X_{M-1})$ eines ersten privaten Eingabevektors $x = (x_0, x_1, ... , x_{M-1})$ durch den ersten Geberknoten nach einer diskreten linearen Transformation, für die der Parsevalsche Satz gilt;

(d) der erste Geberknoten berechnet einen ersten verblindeten Vektor $U$ als $U = A \circ X$, wobei der Operator $\circ$ das Hadamard-Produkt darstellt;

(e) Berechnen eines zweiten transformierten Vektors $Y = (Y_0, Y_1, ... , Y_{M-1})$ eines zweiten privaten Eingangs-vektors $y = (y_0, y_1, ... , y_{M-1})$ durch den zweiten Geberknoten gemäß der diskreten linearen Transformation;

(f) Berechnen eines zweiten verblindeten Vektors $V$ als $V = A^{-1} \circ Y$ durch den zweiten Geberknoten, wobei der Operator $\circ$ das Hadamard-Produkt darstellt;

(g) Senden des i-ten Anteils $U_i$ des ersten verblindeten Vektors $U$ zu dem i-ten Rechenknoten für jedes $i \in$ {0, ... , M - 1} durch den ersten Geber;

(h) Senden des i-ten Anteils $V_i$ des zweiten verblindeten Vektors $V$ zu dem i-ten Rechenknoten für jedes $i \in$ {0, ... , M - 1} durch den zweiten Geber;

(i) der j-te Rechenknoten führt für jedes $i \in$ {0, ... , (M - 1)} Folgendes durch:

- Berechnen eines Ergebnisanteils aus den empfangenen Komponenten $U_j$ und $V_j$

$$R_j = \frac{1}{M} U_j \cdot V_j,$$

und

- Senden des Ergebnisanteils $R_j$ an einen oder mehrere des einen oder der mehreren Ergebnisknoten;

(j) wobei der eine oder die mehreren Ergebnisknoten aus den M empfangenen Ergebnisanteilen $R_j$ für $j \in$ {0, ... , M - 1} das Innenprodukt des ersten und zweiten privaten Eingangsvektors $x, y$ berechnen als:

$$< x, y > = \sum_{j=0}^{M-1} R_j$$

2. Verfahren nach Anspruch 1, wobei der erste und der zweite Geberknoten den ersten und den zweiten privaten Eingabevektor $x$ bzw. y der Dimension M als Erweiterungen der ursprünglichen nicht erweiterten privaten Eingabevektoren $x_{orig}$ bzw. $y_{orig}$ der Dimension N erzeugen, wobei N < M ist und wobei:

$$x_{orig} = (x_0, x_1, ..., x_{N-1})$$

$$y_{orig} = (y_0, y_1, ..., y_{N-1})$$

$$x = (x_0, x_1, ..., x_{N-1}, x_N, ..., x_{M-1})$$

$$y = (y_0, y_1, ..., y_{N-1}, y_N, ..., y_{M-1})$$

und wobei die Komponenten $x_N, ... , x_{M-1}$ und $y_N, ... , y_{M-1}$ so gewählt sind, dass

$$\sum_{i=N}^{M-1} x_i \cdot y_i = 0$$

**3.** Verfahren nach Anspruch 1 oder 2, wobei die Schritte des Bereitstellens der Zufallsvektoren $A$ und $A^{-1}$ für den ersten und den zweiten Geber umfassen, dass beide Geber einen Pseudozufallszahlengenerator synchron betreiben, um die Komponenten des Vektors $A$ zu erzeugen, und der zweite Geberknoten $A^{-1}$ aus dem Vektor $A$ berechnet.

**4.** Verfahren nach Anspruch 1 oder 2, wobei die Schritte des Bereitstellens der Zufallsvektoren $A$ und $A^{-1}$ für den ersten und den zweiten Geber einen vertrauenswürdigen Drittanbieterknoten umfassen, der den Vektor $A$ an den ersten Geberknoten und entweder den Vektor $A$ oder den Vektor $A^{-1}$ an den zweiten Geberknoten übermittelt.

**5.** Verfahren nach Anspruch 1 oder 2, wobei die Schritte des Bereitstellens der Zufallsvektoren $A$ und $A^{-1}$ für den ersten und den zweiten Geber umfassen, dass entweder der Vektor $A$ oder der Vektor $A^{-1}$ kryptographisch an mindestens einen von erstem und zweitem Geberknoten übermittelt wird.

**6.** Verfahren nach einem der vorstehenden Ansprüche, wobei der Vektor A {1,1, ..., 1} ist.

**7.** Verfahren nach einem der vorstehenden Ansprüche, wobei die privaten Eingabevektoren ganzzahlige Komponenten aufweisen und arithmetische Operationen modulo einer Primzahl **p** durchgeführt werden.

**8.** Verfahren nach einem der vorstehenden Ansprüche, wobei die diskrete lineare Transformation, für die der Parsevalsche Satz gilt, ausgewählt ist aus:

- der zahlentheoretischen Transformation (NTT);
- der Fermatschen Zahlentransformation (FNT);
- der Mersenne-Zahlentransformation (MNT);
- der diskreten Fourier-Transformation;
- der Z-Transformation;
- der diskreten Hartley-Transformation;
- der diskreten Wavelet-Transformation mit beliebigen orthogonalen Wavelet-Basen, wie Haar-, Daubechies-, Simlets-, Coiflets-, Meyer-, Morlet- und Gauß-Wavelet-Familien.

**9.** Verfahren nach einem der vorstehenden Ansprüche, wobei die privaten Eingangsvektoren reelle oder komplexe Zahlenkomponenten aufweisen.

## Revendications

**1.** Procédé mis en oeuvre par ordinateur pour la réalisation d'un calcul multipartite par un réseau de processeurs de données, lesdits processeurs de données comprenant des premier et second noeuds de distribution, une pluralité de M noeuds de calcul, et au moins un noeud de résultat, le procédé comprend :

(a) la fourniture du premier noeud de distribution avec un vecteur aléatoire $A$ ayant des composantes $(A_0, A_1, ... , A_{M-1})$ qui sont toutes non nulles ;
(b) la fourniture du second noeud de distribution avec un vecteur inverse $A^{-1}$ ayant des composantes $(A_0^{-1}, A_1^{-1}, ..., A_{M-1}^{-1})$ de telle sorte que pour chaque $i \in \{0, ... , M\text{-}1\}$, le produit $A_i \cdot A_i^{-1} = 1$ ;
(c) le premier noeud de distribution calculant un premier vecteur transformé $X = (X_0, X_1, ... , X_{M-1})$ d'un premier vecteur d'entrée privé $x = (x_0, x_1, ... , x_{M-1})$ selon une transformée linéaire discrète pour laquelle le théorème de Parseval est valable ;
(d) le premier noeud de distribution calculant un premier vecteur aveugle $U$ en tant que $U = A \circ X$ où l'opérateur $\circ$ représente le produit Hadamard ;
(e) le second noeud de distribution calculant un second vecteur transformé $Y = (Y_0, Y_1, ..., Y_{M-1})$ d'un second vecteur d'entrée privé $y = (y_0, y_1, ... , y_{M-1})$ selon ladite transformée linéaire discrète ;
(f) le second noeud de distribution calculant un second vecteur aveugle $V$ en tant que $V = A^{-1} \circ Y$ où l'opérateur ° représente le produit Hadamard ;

(g) le premier distributeur envoyant le i-ème partage $U_i$ du premier vecteur aveugle $\boldsymbol{U}$ au i-ème noeud de calcul pour chaque $\mathbf{i} \in \{\mathbf{0, ... , M - 1}\}$ ;

(h) le second distributeur envoyant le i-ème partage $V_i$ du second vecteur aveugle $\boldsymbol{V}$ au i-ème noeud de calcul pour chacun $\mathbf{i} \in \{\mathbf{0, ... , M - 1}\}$ ;

(i) pour chaque $\mathbf{j} \in \{\mathbf{0, ... , (M - 1)}\}$, le j-ème noeud de calcul :

- le calcul à partir de ses composantes reçues $\boldsymbol{U_i}$ et $\boldsymbol{V_i}$ un partage de résultat

$$R_j = \frac{1}{M} \mathrm{U}_j \cdot \mathrm{V}_j,$$

et

- l'envoi de la part du résultat $\boldsymbol{R_j}$ à un ou plusieurs des noeuds de résultat ;

(j) lesdits un ou plusieurs noeuds de résultat calculant, à partir des M partages de résultat reçues $\boldsymbol{R_j}$ pour $\mathbf{j} \in \{\mathbf{0, ...,} \boldsymbol{M} \mathbf{- 1}\}$, le produit intérieur des premier et second vecteurs d'entrée privés $\boldsymbol{x, y}$ en tant que :

$$< \boldsymbol{x}, \boldsymbol{y} > = \sum_{j=0}^{M-1} R_j$$

2. Procédé selon la revendication 1, dans lequel les premier et second noeuds de distribution génèrent les premier et second vecteurs d'entrée privés $\boldsymbol{x}$ et $\boldsymbol{y}$ de dimension M, respectivement, en tant qu'extensions de vecteurs d'entrée privés non expansés d'origine $\boldsymbol{x_{orig}}$ et $\boldsymbol{y_{orig}}$ de dimension N, respectivement, où N < M, et où :

$$\boldsymbol{x_{orig}} = (x_0, x_1, \ldots, x_{N-1})$$

$$\boldsymbol{y_{orig}} = (y_0, y_1, \ldots, y_{N-1})$$

$$\boldsymbol{x} = (x_0, x_1, \ldots, x_{N-1}, x_N, \ldots, x_{M-1})$$

$$\boldsymbol{y} = (y_0, y_1, \ldots, y_{N-1}, y_N, \ldots, y_{M-1})$$

et où les composantes $x_N, \ldots, x_{M-1}$ et $y_N, \ldots, y_{M-1}$ sont choisies telles que :

$$\sum_{i=N}^{M-1} x_i \cdot y_i = 0$$

3. Procédé selon la revendication 1 ou 2, dans lequel les étapes de fourniture des premier et second distributeurs avec les vecteurs aléatoires $\boldsymbol{A}$ et $\boldsymbol{A^{-1}}$ comprennent les deux distributeurs actionnant un générateur de nombres pseudoaléatoires en synchronisme pour générer les composantes de vecteur $\boldsymbol{A}$, et le second noeud de distribution calculant $\boldsymbol{A^{-1}}$ à partir du vecteur $\boldsymbol{A}$.

4. Procédé selon la revendication 1 ou 2, dans lequel les étapes de fourniture des premier et second distributeurs avec les vecteurs aléatoires $\boldsymbol{A}$ et $\boldsymbol{A^{-1}}$ comprennent un vecteur de communication de noeud tiers de confiance $\boldsymbol{A}$ au premier noeud de distribution et l'un ou l'autre du vecteur $\boldsymbol{A}$ ou du vecteur $\boldsymbol{A^{-1}}$ au second noeud de distribution.

5. Procédé selon la revendication 1 ou 2, dans lequel les étapes de fourniture des premier et second distributeurs avec les vecteurs aléatoires $\boldsymbol{A}$ et $\boldsymbol{A^{-1}}$ comprennent la communication soit du vecteur $\boldsymbol{A}$ soit du vecteur $\boldsymbol{A^{-1}}$ de manière cryptographique à au moins un élément parmi les premier et second noeuds de distribution.

6. Procédé selon une quelconque revendication précédente, dans lequel le vecteur A est {1,1, ..., 1}.

7. Procédé selon une quelconque revendication précédente, dans lequel les vecteurs d'entrée privés ont des composantes de nombres entiers et des opérations arithmétiques sont effectuées module un nombre premier **p.**

8. Procédé selon une quelconque revendication précédente, dans lequel la transformée linéaire discrète pour laquelle le théorème de Parseval est valable est choisie parmi :

   - la transformée théorique numérique (NTT) ;
   - la transformée en nombre de Fermat (FNT) ;
   - la transformée en nombre de Mersenne (MNT) ;
   - la transformée de Fourier discrète ;
   - la transformée-Z ;
   - la transformée de Hartley discrète ;
   - la transformée en ondelettes discrète avec des bases d'ondelettes orthogonales arbitraires, telles que les familles d'ondelettes Haar, Daubechies, Simlets, Coiflets, Meyer, Morlet et Gaussiennes.

9. Procédé selon une quelconque revendication précédente, dans lequel les vecteurs d'entrée privés ont des composantes de nombres réels ou complexes.

Dealer Nodes

Computing Nodes

Result Nodes

**Fig. 1**

EP 4 236 193 B1

| Dealer Node 1 | Dealer Node 2 | Computing Node 0 | ▪▪▪ | Computing Node M-1 | Result Nodes |

**Phase 1 – Share Distribution**

$\{V_{i,0}\}, i \in \{0, \dots, N-1\}$

$\{V_{i,M-1}\}, i \in \{0, \dots, N-1\}$

$\{U_{i,0}\}, i \in \{0, \dots, N-1\}$

$\{U_{i,M-1}\}, i \in \{0, \dots, N-1\}$

**Phase 2 - Computation**

$$R_0 = \frac{1}{M} \sum_{i=0}^{N-1} U_{i,0} \cdot V_{i,0}$$

$$R_{M-1} = \frac{1}{M} \sum_{i=0}^{N-1} U_{i,M-1} \cdot V_{i,M-1}$$

**Phase 3 – Result Reconstruction**

$R_0$

$R_{M-1}$

$$<x, y> = \sum_{j=0}^{M-1} R_j$$

**Fig. 2**

Fig. 3

Fig. 4

Dealer Node 1    Dealer Node 2                    Computing Node 0    ...    Computing Node M-1

Generate
$[u_{i,k}]_0, [v_{i,k}]_0$

Generate
$[u_{i,k}]_{M-1}, [v_{i,k}]_{M-1}$

Compute a share from

$$v_{N-1,M-1} = -u_{N-1,M-1}^{-1} \cdot \sum_{i=0}^{N-1} \sum_{j=0}^{M-2} u_{i,j} \cdot v_{i,j}$$

using BGW SMPC

Locally compute
$$[U_{i,k}]_0 = \sum_{q=0}^{M-1} \lambda_{k,q} [u_{i,q}]_0$$
$$[V_{i,k}]_0 = \sum_{q=0}^{M-1} \lambda_{k,q} [v_{i,q}]_0$$

Locally compute
$$[U_{i,k}]_{M-1} = \sum_{q=0}^{M-1} \lambda_{k,q} [u_{i,q}]_{M-1}$$
$$[V_{i,k}]_{M-1} = \sum_{q=0}^{M-1} \lambda_{k,q} [v_{i,q}]_{M-1}$$

$[V_{i,k}]_0, k \in \{0, \dots, M-1\}$

$[U_{i,k}]_0, k \in \{0, \dots, M-1\}$    $[U_{i,k}]_0, [V_{i,k}]_0, k \in \{0, \dots, M-1\}$

Reconstruct
$U_{i,M-1}, V_{i,M-1}$

Reconstruct
$U_{i,0}, V_{i,0}$    $[U_{i,k}]_{M-1}, [V_{i,k}]_{M-1}, k \in \{0, \dots, M-1\}$

Reconstruct
$U_i, V_i$    $[V_{i,k}]_{M-1}, k \in \{0, \dots, M-1\}$

$[U_{i,k}]_{M-1}, k \in \{0, \dots, M-1\}$

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YAO, ANDREW CHI-CHIH.** How to generate and exchange secrets. *27th Annual Symposium on Foundations of Computer Science (SFCS 1986). Foundations of Computer Science, 1986., 27th Annual Symposium on.,* 1986, ISBN 978-0-8186-0740-0, 162-167
- **O. GOLDREICH ; S. MICALI ; A. WIGDERSON.** How to play ANY mental game. *Proceedings of the nineteenth annual ACM symposium on Theory of Computing,* January 1987, 218-229
- GMW vs. Yao? Efficient secure two-party computation with low depth circuits. **T. SCHNEIDER ; M. ZOHNER.** Financial Cryptography and Data Security (FC'13), ser. LNCS. Springer, 2013, vol. 7859, 275-292
- **BEN-OR, M. ; GOLDWASSER, S. ; WIGDERSON, A.** Completeness theorems for Non-Cryptographic Fault-Tolerant Distributed Computation. *Proc. ACM STOC '88,* 1988, 1-10
- Multiparty Computation from Somewhat Homomorphic Encryption. **DAMGÅRD I. ; PASTRO V. ; SMART N. ; ZAKARIAS S.** Advances in Cryptology-CRYPTO 2012. CRYPTO 2012. Lecture Notes in Computer Science. Springer, 2012, vol. 7417
- The Round Complexity of Secure Protocols (Extended Abstract). **BEAVER, D. ; S. MICALI ; P. ROGAWAY.** 22nd Annual ACM Symposium on Theory of Computing. ACM Press, 1990, 503-513
- Gate Evaluation Secret Sharing and Secure One-Round Two-Party Computation. **KOLESNIKOV, V.** Advances in Cryptology - ASIACRYPT 2005. Science. Springer, 2005, vol. 3788, 136-155
- **SONNINO, ALBERTO.** FMPC: Secure Multiparty Computation from Fourier Series and Parseval's Identity. *arXiv:1912.02583,* 2019